# EUROPÄISCHE PATENTSCHRIFT

(11) **EP 0 866 817 B1**
(45) Veröffentlichungstag und Bekanntmachung des Hinweises auf die Patenterteilung: **01.09.1999**
(21) Anmeldenummer: 96941636.1
(22) Anmeldetag: 02.12.1996
(51) Int. Cl.: C08G 18/28, C08J 9/00, C08K 5/3415

(54) **VERFAHREN ZUR HERSTELLUNG VON SELBSTTRENNENDEN, KOMPAKTEN ODER ZELLIGEN, GEGEBENENFALLS VERSTÄRKUNGSMITTEL ENTHALTENDEN FORMKÖRPERN AUS POLYISOCYANAT-POLYADDITIONSPRODUKTEN UND INNERE FORMTRENNMITTEL HIERFÜR**
PROCESS FOR PREPARING SELF-RELEASING, COMPACT OR CELLULAR MOULDED BODIES OPTIONALLY CONTAINING REINFORCING AGENTS AND MADE OF POLYISOCYANATE POLYADDITON PRODUCTS AND INTERNAL MOULD RELEASE AGENTS THEREFOR
PROCEDE DE PRODUCTION DE CORPS MOULES AUTODEMOULANTS, COMPACTS OU CELLULAIRES, CONTENANT EVENTUELLEMENT DES AGENTS DE RENFORCEMENT ET CONSTITUES DE PRODUITS DE POLYADDITION POLYISOCYANATES, ET AGENTS INTERNES DE DEMOULAGE POUR DE TELS CORPS

(30) Priorität: 11.12.1995 DE 19546097
(43) Veröffentlichungstag der Anmeldung: 30.09.1998
(73) Patentinhaber: BASF AKTIENGESELLSCHAFT, 67056 Ludwigshafen (DE)
(72) Erfinder: HORN, Peter, D-69118 Heidelberg (DE); HESSE, Anton, D-69469 Weinheim (DE); RATH, Hans, Peter, D-67269 Grünstadt (DE); GREIF, Norbert, D-67273 Bobenheim (DE); PARTUSCH, Georg, D-86932 Puergen (DE); BAUMANN, Edwin, D-67105 Schifferstadt (DE); LARBIG, Harald, D-67063 Ludwigshafen (DE); HECKMANN, Walter, D-69469 Weinheim (DE); BECKER, Johannes, D-67069 Ludwigshafen (DE)
(86) Internationale Anmeldenummer: EP9605334
(87) Internationale Veröffentlichungsnummer: WO9721747

(56) Entgegenhaltungen:
- DE-B- 1 288 787
- US-A- 4 487 912
- CHEMISCHES ZENTRALBLATT, Nr. 18, 1966, Seite 6146 XP002029416 FURUKAWA ET AL: "HERSTELLUNG VON SCHAUM" & JP 38 005 998 A 14.Mai 1963
- DATABASE WPI Section Ch, Week 8719 Derwent Publications Ltd., London, GB; Class A95, AN 87-133766 XP002029417 ANONYMOUS: "Dispersants for use in lubricating oils and fuels - comprise alkyl or alkenyl-substd. succinimide(s), obtd. from 3-25C poly:amine and alk(en)yl-substd. succinic anhydride" & RESEARCH DISCLOSURE, Bd. 276, Nr. 007, 10.April 1987, EMSWORTH, GB,

## Beschreibung

Gegenstände der Erfindung sind ein Verfahren zur Herstellung von selbsttrennenden, kompakten oder zelligen, gegebenenfalls Verstärkungsmittel enthaltenden Formkörpern aus Polyisocyanat-Polyadditionsprodukten durch Umsetzung von
a) gegebenenfalls modifizierten organischen Polyisocyanaten mit
b) höhermolekularen Verbindungen mit mindestens zwei reaktiven Wasserstoffatomen und gegebenenfalls
c) Kettenverlängerungs- und/oder Vernetzungsmitteln
in Gegenwart von
d) inneren Formtrennmitteln
und in Gegenwart oder Abwesenheit von
e) Katalysatoren,
f) Treibmitteln,
g) Verstärkungsmitteln und
h) Hilfsmitteln
in einem offenen oder geschlossenen Formwerkzeug, wobei als innere Formtrennmittel (d) Alkylbernsteinsäureamide und/oder -imide und/oder Alkenylbernsteinsäureamide und/oder -imide mit einem mittleren Molekulargewicht (Zahlen mittel) Mₙ der Alkyl- oder Alkenylgruppen der Alkyl- oder Alkenyl bernsteinsäureamide oder -imide von 800 bis 3000 verwendet werden
und die Verwendung der Alkyl- und/oder Alkenylbernsteinsäureamide oder -imide, die bestehen können aus Alkyl- oder Alkenylbernsteinsäuremonoamiden, -monoimiden, -monoamidmonoimiden, -polyamiden, -polyimiden, -polyamidmonoimiden, -amidpolyimiden oder -polyamidpolyimiden als innere Formtrennmittel für Formkörper aus Polyisocyanat-Polyadditionsprodukten.

Die Herstellung von Formkörpern aus kompakten oder zelligen, gegebenenfalls Verstärkungsmittel enthaltenden Polyisocyanat-Polyadditionsprodukten wie z.B. kompakten oder zelligen, Urethan- und/oder Harnstoffgruppen enthaltenden Elastomeren, sogenannten Polyurethan(PU)-Elastomeren und flexiblen, halbharten oder harten Urethan-, Urethan- und Harnstoffgruppen und gegebenenfalls Isocyanuratgruppen aufweisenden Schaumstoffen, sogenannten PU- oder Polyisocyanurat(PIR)-Schaumstoffen, durch Umsetzung von organischen und/oder modifizierten organischen Polyisocyanaten mit höhermolekularen Verbindungen mit mindestens zwei reaktiven Wasserstoffatomen, z.B. Polyoxyalkylen-polyaminen und/oder vorzugsweise organischen Polyhydroxylverbindungen mit Molekulargewichten von z.B. 500 bis 12.000 und gegebenenfalls niedermolekularen Kettenverlängerungs- und/oder Vernetzungsmitteln in Gegenwart oder Abwesenheit von Katalysatoren, Treibmitteln, Hilfsmitteln und/oder Zusatzstoffen in einem offenen oder geschlossenen Formwerkzeug ist bekannt aus zahlreichen Patent- und Literaturveröffentlichungen. Durch geeignete Wahl der Aufbaukomponenten, z.B. den organischen Polyisocyanaten, den höhermolekularen Verbindungen mit NCO-Gruppen reaktiven Wasserstoffatomen und gegebenenfalls Kettenverlängerungsmitteln und/oder Vernetzungsmitteln kannen nach dieser Verfahrensweise elastische oder starre, kompakte oder zellige Formkörper aus Polyisocyanat-polyadditionsprodukten sowie alle dazwischen liegenden Modifikationen hergestellt werden.

Eine Übersicht über die herstellung von Formkörpern aus beispielsweise zelligen oder kompakten PU-Gießelastomeren, PU-Elastomeren, PU-Schaumstoffen, PIR-Schaumstoffen u.a., ihre mechanischen Eigenschaften und ihre Verwendung wird z.B. im Kunststoff-Handbuch, Band VII, "Polyurethane", 1. Auflae, 1966, herausgegeben von Dr. R. Vieweg und Dr. A. Höchtlen, 2. Auflage, 1983, herausgegeben von Dr. G. Oertel und 3. Auflage, 1993, herausgegeben von Dr. G.W. Becker und Dr. D. Braun (Carl-Hanser-Verlag, München, Wien) und "Integralschaumstoffe", herausgegeben von Dr. H. Piechota und Dr. H. Rohr (Carl-Hanser-Verlag, München, Wien, 1975) gegeben.

Obgleich die Herstellung von kompakten oder zelligen, elastischen oder starren PU- oder PIR-Formkörpern eine außerordentliche technische Bedeutung erlangt hat, weisen die beschriebenen Verfahren, z.B. wegen der hervorragenden Adhäsion von Polyurethanen zu anderen Werkstoffen, auch technische Mängel auf. Nachteilig ist insbesondere, daß die PU-Formkörper an den Formwerkzeugen haften und daher schwer entformbar sind, was häufig zur Beschädigung der Formkörper, insbesondere deren Oberfläche, führt. Zur Vermeidung dieses Nachteils werden in der Regel polierte, metallische Formwerkzeuge verwendet und/oder die Formwerkzeuginnenflächen werden vor der Herstellung der Formkörper mit einem äußeren Trennmittel, beispielsweise einem Produkt auf Wachs-, Seifen- oder Ölbasis oder einem Silikonöl eingesprüht. Diese Methode ist nicht nur zeit- und kostenaufwendig, sondern kann auch, insbesondere bei silikonhaltigen Trennmitteln, zu erheblichen Lackierproblemen führen.

Zur Verbesserung der selbsttrennenden Eigenschaften bei der Herstellung von PU-Formkörpern, insbesondere PU-Polyharnstoff (PH)-Formkörpern nach der RIM-Technik, wurden sogenannte "innere" Formtrennmittel entwickelt.

US-A-4 487 912 beschreibt die Herstellung von PU-Elastomeren nach der RIM-Technik in Gegenwert von Alkyl- oder Alkenylbernsteinsäureamiden als inner Trennmittel. In den Beispielen wird als Alkenylgruppe Dodecenyl eingesetzt.

Nach Angaben der EP-A-0 153 639 (US-A-4 581 387) werden zur Herstellung von PU-PH-Formkörpern nach der RIM-Technik als innere Trennmittel Carbonsäureester und/oder Carbonsäureamide verwendet, die hergestellt werden durch Veresterung oder Amidierung einer Mischung aus Montansäure und mindestens einer aliphatischen Carbonsäure mit mindestens 10 Kohlenstoffatomen mit mindestens difunktionellen Alkanolaminen, Polyolen und/oder Polyaminen mit Molekulargewichten von 60 bis 400.

Nach Angaben der US-A-4 519 965 finden als innere Formtrennmittel bei der Reaktionsspritzgußtechnik Mischungen Verwendung aus einem Zinkcarboxylat mit 8 bis 24 Kohlenstoffatomen im Carboxylrest und Stickstoff enthaltenden, mit Isocyanatgruppen reagierenden Polymeren zur Verbesserung der Verträglichkeit des Zinkcarboxylats mit den Aufbaukomponenten zur Polyurethan-Polyharnstoff-Herstellung.

In der EP-A-0 255 905 (US-A-4 766 172) wird eine Trennmittelzusammensetzung und ein Verfahren zur Herstellung von elastischen Formkörpern beschrieben, die besteht aus einer bei Raumtemperatur flüssigen Lösung eines Zinksalzes einer höheren aliphatischen Carbonsäure in ausgewählten tertiären Aminoverbindungen der Formel R¹R²N(CH₂)ₘNR(CH₂)ₙNR³R⁴.

Nach den Angaben der DE-A-36 31 842 (US-A-4 764 537) enthalten innere Formtrennmittel zur Herstellung von Formkörpern nach dem Polyisocyanat-Polyadditionsverfahren mindestens ein Ketimin, Aldimin, Enamin und/oder eine cyclische Schiff'sche Base, mindestens ein Metallsalz einer organischen Carbonsäure mit 8 bis 24 C-Atomen und mindestens eine organische Carbonsäure, organische Sulfonsäure, Mineralsäure oder Amidosulfonsäure. Diese Trennmittelzusammensetzungen zeigen bei Urethan- und Harnstoffgruppen enthaltenden, im wesentlichen kompakten Formkörpern und harten polyurethan-Integralschaumstoffen, hergestellt nach der RIM-Technik hervorragende Trenneigenschaften.

Nachteilig ist lediglich, daß die unter Verwendung von Kettenverlängerungsmitteln auf der Grundlage von niedermolekularen mehrwertigen Alkoholen und/oder Polyoxyalkylen-polyolen hergestellten Urethangruppen enthaltenden Formkörper relativ langsam durchhärten und vor der Lackierung zur Entfettung mit 1,1,3-Trichlorethandampf behandelt werden müssen.

Zur Beseitigung dieses Nachteils werden zur Herstellung von elastischen, im wesentlichen kompakten Polyurethan-Formkörpern nach den Angaben der EP-B-0 262 378 und DE-A-39 04 810 und zur Herstellung von Urethangruppen enthaltenden, weichelastischen Formkörpern mit einer verdichteten Randzone und einem zelligen Kern nach DE-A-39 04 812 als inneres Formtrennmittel verwendet eine Mischung aus mindestens einem organischen Amin und mindestens einem Metallsalz der Stearinsäure bzw. eine Mischung aus mindestens einem organischen Amin, mindestens einem Ketimin und mindestens einem Metallsalz der Stearinsäure in Verbindung mit mindestens einer organischen Mono- und/oder Dicarbonsäure oder deren Anhydride. Vorteilhaft an diesen Verfahren ist, daß die hergestellten PU-Formkörper keiner Oberflächenbehandlung mit 1,1,3-Trichlorethandampf bedürfen. Nachteilig ist jedoch, daß großflächige Formkörper, insbesondere solche mit komplizierten Raumformen, nur schwer hergestellt werden können, da der Fließweg der Reaktionsmischung relativ kurz ist, so daß großvolumige Formwerkzeuge, insbesondere solche mit dünnen Hohlräumen und engen Durchflüssen vielfach nur unzureichend oder an bestimmten Stellen überhaupt nicht gefüllt werden.

Für eine Auswahl des jeweils optimalen Trennmittels bedarf es üblicherweise nicht nur der Kenntnis der Ausgangsstoffe der PU-bzw. PU-PH-Formulierung, z.B. der Gegenwart oder Abwesenheit von Zinkstearat, sterisch gehinderten aromatischen Diaminen, Polyoxyalkylen-polyaminen, Treibmittel u.a., sondern auch der Art des Formwerkzeugmaterials, dessen Oberflächenbeschaffenheit und der Formwerkzeuggeometrie sowie der Anordnung der Füllöffnungen. In den meisten Fällen bedarf die Wahl des besten Trennmittels einer experimentellen Optimierung.

Weitere andere äußere und/oder innere Formtrennmittel zur Herstellung von PU-Schaumstoffen werden z.B. beschreiben in der DE-A-19 53 637, DE-A-21 21 670, DE-B-23 07 589, DE-A-23 56 692, DE-A-23 63 452, DE-A-24 04 310, DE-A-24 27 273, DE-A-24 31 968 sowie zur Herstellung von PU-Formkörpern mit einer Dichte im Bereich von 0,8 bis 1,4 g/cm³ in der EP-A-0 265 781. Trotz dieser Vielzahl bekannter Methoden konnte die Problematik der Selbsttrennung von PU- bzw. PU-PH-Formkörpern nicht abschließend gelöst werden. Häufig ist die Trennwirkung der verwendeten Formtrennmittel unzureichend und/oder die Lagerstabilität der Trennmittel enthaltenden Polyolkomponente nicht gewährleistet.

Alkyl- und Alkenylbernsteinsäuren fanden bereits zur Herstellung von Polyisocyanat-Polyadditionsprodukten Verwendung. Nach Angaben der EP-A-666 880 (WO 9400937) eignen sich Alkalimetall- und Erdalkalimetallsalze von Alkyl- und Alkenylbernsteinsäuren als Katalysatoren zur Herstellung von Polyurethanen und/oder Polyharnstoffen, insbesondere von Schaumstoffen aus solchen Polyadditionsprodukten, da sie die Zellstruktur derselben vorteilhaft zu beeinflussen vermögen.

Die Aufgabe der vorliegenden Erfindung bestand darin, innere Formtrennmittel mit einem breiten Anwendungsspektrum zu entwikkeln, die sowohl zur Herstellung von kompakten als auch zelligen Formkörpern aus Polyisocyanat-Polyadditionsprodukten, wie z.B. Urethan- und/oder Harnstoff- und/oder Isocyanuratgruppen enthaltenden Polyadditionsprodukten, geeignet sind. Die trennmittelhaltigen Polyolkomponenten (A-Komponenten) sollten lagerbeständig sein und nach einem wirtschaftlichen, umweltfreundlichen Verfahren zu kompakten oder zelligen, vorzugsweise großflächigen und/ oder großvolumigen, gegebenenfalls Verstärkungsmittel enthaltenden Formkörpern oder Formkörpern mit einer im wesentlichen kompakten Randzone und einem zelligen Kern, sogenannten Integralschaumstoffen, verarbeitet werden können.

Sofern die erhaltenen Formkörper lackiert werden, sollte auf eine Vorbehandlung mit organischen Lösungsmitteln, insbesondere halogenhaltigen Lösungsmitteln, zweckmäßigerweise vollständig verzichtet werden können.

Diese Aufgabe konnte überraschenderweise durch die Verwendung von Alkyl- und/oder Alkenylbernsteinsäureamide und/oder -imide als innere Trennmittel zur Herstellung der Formkörper aus Polyisocyanat-Polyadditionsprodukten gelöst werden.

Gegenstand der Erfindung ist somit ein Verfahren zur Herstellung von selbsttrennenden, kompakten oder zelligen, gegebenenfalls Verstärkungsmittel enthaltenden Formkörpern aus Polyisocyanat-Polyadditionsprodukten durch Umsetzung von
a) organischen und/oder modifizierten organischen Polyisocyanaten mit
b) mindestens einer Verbindung mit mindestens zwei reaktiven Wasserstoffatomen und einem Molekulargewicht von 500 bis 9.000 und gegebenenfalls
c) Kettenverlängerungs- und/oder Vernetzungsmitteln
in Gegenwart von
d) inneren Formtrennmitteln
und in Gegenwart oder Abwesenheit von
e) Katalysatoren,
f) Treibmitteln,
g) Verstärkungsmitteln und
h) Hilfsmitteln
in einem offenen oder geschlossenen Formwerkzeug, gegebenenfalls unter Verdichtung, das dadurch gekennzeichnet ist, daß man als innere Formtrennmittel Alkylbernsteinsäureamide und/oder -imide und/oder Alkenylbernsteinsäureamide und/oder -imide mit einem mittleren Molekulargewicht (Zahlenmittel) Mn der Alkyl- oder Alkenylgruppen der Alkyl- oder Alkenylbernsteinsäureamide oder -imide von 800 bis 3000 verwendet.

Ein anderer Gegenstand der Erfindung ist die Verwendung der Alkylbernsteinsäureamide oder -imide und Alkenylbernsteinsäureamide und/oder -imide, vorzugsweise ausgewählt aus der Gruppe der Alkyl- und Alkenylbernsteinsäuremonoamide, -monoimide, Poly(alkylbernsteinsäure)- und Poly(alkenylbernsteinsäure)-polyamide, -polyimide, -monoamidmonoimide, -polyamidmonoimide, -monoamidpolyimide und -polyamidpolyimide und Mischungen aus mindestens zwei der -amide oder -imide oder Mischungen aus -amiden und -imiden als innere Formtrennmittel für die Herstellung von Formkörpern aus Polyisocyanat-Polyadditionsprodukten.

Die erfindungsgemäß verwendbaren inneren Trennmittel sind metallionenfrei, leicht mit den übrigen Komponenten der Polyolkomponente (A-Komponente) mischbar und aufgrund der guten Löslichkeit sehr gut lagerbeständig. Die Alkyl- und insbesondere Alkenylbernsteinsäureamide und/oder -imide zeigen im wesentlichen unabhängig von der Zusammensetzung der Polyolkomponente eine beträchtlich verbesserte Trennwirkung bei der Formkärperherstellung. Aufgrund des breiten Verwendungsspektrums bezüglich der einzelnen PU-Systeme können mit den neuen Trennmitteln gleichermaßen kompakte oder zellige, verstärkungsmittelfreie oder Verstärkungsmittel enthaltende, Urethan-, Harnstoff-, Urethan- und Harnstoffgruppen sowie gegebenenfalls Isocyanuratgruppen enthaltende Formkörper hergestellt werden.

Zu den Aufbaukomponenten (a) bis (h) zur Herstellung der kompakten oder zelligen Polyisocyanat-Polyadditionsprodukte und insbesondere zu den erfindungsgemäß verwendbaren inneren Formtrennmitteln (d) und den Ausgangsstoffen zu ihrer Herstellung ist folgendes auszuführen:
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, araliphatische Diisocyanate wie z.B. m-, p-Xylylen-diisocyanat und Xylylen-diisocyanat-Isomerenmischungen und vorzugsweise aromatischen Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI), Mischungen aus Roh-MDI und Toluylen-diisocyanaten, 1,4- und 1,5-Naphthylen-diisocyanat, 3,3'-Dimethyl-diphenyl-4,4'-diisocyanat, 1,2-Diphenylethan-diisocyanat und Phenylen-diisocyanat. Die organischen Di- und Polyisocyanate können einzeln oder in Form von Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion-, Urethonimin- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Alkanoldiolen, Triolen, Dialkylenglykolen, Trialkylenglykolen oder Polyoxyalkylenglykolen mit Molekulargewichten bis 6.000 modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 14 bis 1,5 Gew.-%, vorzugsweise von 8 bis 2,5 Gew.-%, bezogen auf das Gesamtgewicht, hergestellt aus den nachfolgend beschriebenen Polyester- und/ oder vorzugsweise Polyether-polyolen und 1,4- und 1,5-Naphthylen-diisocyanat, 3,3'-Dimethyl-diphenyl-4,4'-diisocyanat, 1,2-Diphenylethan-diisocyanat, Phenylendiisocyanat und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.
   Besonders bewährt haben sich als organische Polyisocyanate und kommen vorzugsweise zur Anwendung zur Herstellung von zelligen Elastomeren: NCO-Gruppen enthaltende Prepolymere mit einem NCO-Gehalt von 14 bis 9 Gew.-%, insbesondere auf Basis von Polyether- oder Polyester-polyolen und einem oder mehreren Diphenylmethan-diisocyanat-Isomeren, vorteilhafterweise 4,4'-Diphenylmethan-diisocyanat und/oder modifizierte Urethangruppen enthaltende organische Polyisocyanate mit einem NCO-Gehalt von 33,6 bis 15 Gew.-%, insbesondere auf Basis von 4,4'-Diphenylmethan-diisocyanat oder Diphenylmethandiisocyanat-Isomerengemischen, zur Herstellung von flexiblen Polyurethanschaumstoffen: Mischungen aus 2,4- und 2,6-Toluylen-diisocyanaten, Mischungen aus Toluylen-diisocyanaten und Roh-MDI oder insbesondere Mischungen aus den vorgenannten Prepolymeren auf Basis von Diphenylmethan-diisocyanat-Isomeren und Roh-MDI und zur Herstellung von Polyurethan- oder Polyurethan-Polyisocyanurat-Hartschaumstoffen: Roh-MDI.
b) Als höhermolekulare Verbindungen b) mit mindestens zwei reaktiven Wasserstoffatomen werden zweckmäßigerweise solche mit einer Funktionalität von 2 bis 8, vorzugsweise 2 bis 6 und einem Molekulargewicht von 500 bis 9.000 verwendet. Bewährt haben sich z.B. Polyether-polyamine und/oder vorzugsweise Polyole ausgewählt aus der Gruppe der Polyether-polyole, Polyester-polyole, Polythioether-polyole, hydroxylgruppenhaltigen Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechendne Dicarbonsäurederivate, wie z.B. Dicarbonsäure-mono- und -diester von Alkoholen mit 1 bis 4 Kohlenstoffatomen oder Dicarbonsuäreanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Alkandiole und Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Zur Herstellung foggingarmer PU-Formkörper werden die Polyester-polyole vor ihrer Verwendung zweckmäßigerweise einer Destillation bei Temperaturen von 140 bis 280°C und unter vermindertem Druck von 0,05 bis 30 mbar, z.B. einer Dünnschichtdestillation, zur Abtrennung flüchtiger Bestandteile unterworfen.
   Die erhaltenen Polyester-polyole besitzen vorzugsweise eine Funktionalität von 2 bis 4, insbesondere 2 bis 3 und ein Molekulargewicht von 500 bis 3.000, vorzugsweise 1.200 bis 3.000 und insbesondere 1.800 bis 2.500.
   Insbesondere als Polyole vewendet werden jedoch Polyether-polyole, die nach bekannten Verfahren, beispielsweise durch anionische Polymerisation mit Alkalihydroxiden, wie Natrium-oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid undn 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4, 3,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine wie z.B. Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.
   Die Polyether-polyole, vorzugsweise Polyoxypropylen- und Polyoxypropylen-polyoxyethylen-polyole, besitzen zur Herstellung von flexiblen Formkörpern eine Funktionalität von vorzugsweise 2 bis 3 und insbesondere 2 bis 2,6 und Molekulargewichte von 1.800 bis 9.000, vorzugsweise 2.000 bis 6.500 und insbesondere 2.400 bis 5.200 und zur Herstellung von steifen, harten Formkörpern eine Funktionalität von vorzugsweise 3 bis 8, insbesondere 3 bis 6 und Molekulargewichte von 500 bis 2.400, vorzugsweise 600 bis 1.800 und insbesondere 600 bis 1.500 und geeignete Polyoxytetramethylen-glykole ein Molekulargewicht bis ungefähr 3.500.
   Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyether-polyole können ebenso wie die Polyester-polyole einzeln oder in Form von Mischungen verwendet werden. Ferner können sie mit den Pfropf-polyether-polyolen oder Polyester-polyolen sowie den hydroxylgruppenhaltigen Polyesteramiden, Polyacetalen, Polycarbonaten und/oder Polyether-polyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den hydroxylgruppenhaltigen Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyether-polyamine können aus den obengenannten Polyetherpolyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).
c) Die Polyisocyanat-Polyadditionsprodukte können ohne oder unter Mitverwendung von difunktionellen Kettenverlängerungs- und/oder tri- und höherfunktionellen Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Zur Herstellung von kompakten und zelligen PU- oder PU-PH-Elastomeren, thermoplastischen Polyurethanen und flexiblen, weichelastischen PU-Schaumstoffen werden zweckmäßigerweise Kettenverlängerungsmittel und gegebenenfalls Vernetzungsmittel mitverwendet. Als Kettenverlängerungs- und/oder Vernetzungsmittel verwendet werden Diole und/oder Triole mit Molekulargewichten kleiner als 500, vorzugsweise von 60 bis 300. In Betracht kommen beispielsweise Dialkylenglykole und aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/ oder Triolen als Startermoleküle.
   Zur Herstellung zelliger Polyurethan(PU)-Polyharnstoff(PH)-Elastomerer können neben den obengenannten Diolen und/oder Triolen oder im Gemisch mit diesen als Kettenverlängerungs- oder Vernetzungsmittel auch sekundäre aromatische Diamine, primäre aromatische Diamine, 3,3'-di- und/oder 3,3'-, 5,5'-tetraalkylsubstituierte Diamino-diphenylmethane Anwendung finden.
   Als sek. aromatische Diamine seien beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek-pentyl-, N,N'-Di-sek-hexyl-, N,N'-Di-sek-decyl-, N,N'-Di-cyclohexyl-p- bzw. -m-Phenylendiamin, N,N'-Dimethyl-, N,N'-Diethyl-,N,N'-Diisopropyl-, N,N'-Di-sek-butyl-, N,N'-Dicyclohexyl-4,4'-diaminodiphenylmethan und N,N'-Di-Sek-butyl-benzidin.
   Als aromatische Diamine werden zweckmäßigeweise solche verwendet, die in ortho-Stellung zu den Aminogruppen mindestens einen Alkylsubstituenten besitzen, bei Raumtemperatur flüssig und mit der Komponente (b), insbesondere den Polyether-polyolen, mischbar sind. Bewährt haben sich z.B. alkylsubstituierte meta-Phenylendiamine der Formeln 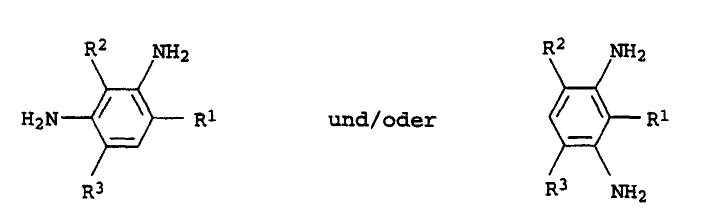 in den R³ und R² gleich oder verschieden sind und einen Methyl-, Ethyl-, Propyl- und Isopropylrest bedeuten und R¹ ein linearer oder verzweigter Alkylrest mit 1 bis 10, vorzugsweise 4 bis 6 Kohlenstoffatomen ist.
   Insbesondere bewährt haben sich solche Alkylreste R¹, bei denen die Verzweigungsstelle am C¹-Kohlenstoffatom sitzt. Als Reste R¹ seien beispielhaft genannt der Methyl-, Ethyl-, Isopropyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propyl-Rest.
   Als alkylsubstituierte m-Phenylendiamine kommen beispielsweies in Betracht: 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl)-, 2,4-Dimethyl-6-(1,1-dimethyl-n-propyl)-, 2-(1-Methyl-n-butyl)-4,6-dimethyl-phenylendiamin-1,3. Vorzugsweise verwendet werden 1-Methyl-3,5-diethyl-2,4- bzw. -2,6-phenylendiamine, 2,4-Dimethyl-6-tert.-butyl-, 2,4-Dimethyl-6-isooctyl- und 2,4-Dimethyl-6-cyclohexyl-m-phenylen-diamin-1,3.
   Geeignete 3,3'-di- und 3,3',5,5'-tetra-n-alkylsubstituierte 4,4'-Diaminodiphenylmethane sind beispielsweise 3,3'-Di-, 3,3',5,5'-Tetramethyl-, 3,3'-Di-, 3,3',5,5'-Tetraethyl-, 3 ,3'-Di- und 3,3',5,5'-Tetra-n-propyl-4,4'-diaminodiphenylmethan.
   Vorzugsweise verwendet werden Diamino-diphenylmethane der Formel 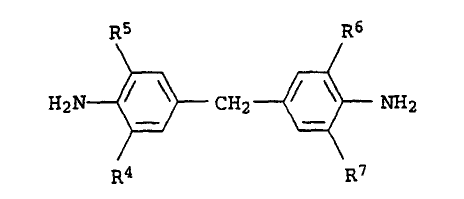 in der R⁴, R⁵, R⁶ und R⁷ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die 4,4'-Diamino-diphenylmethane können auch im Gemisch mit Isomeren der Formeln 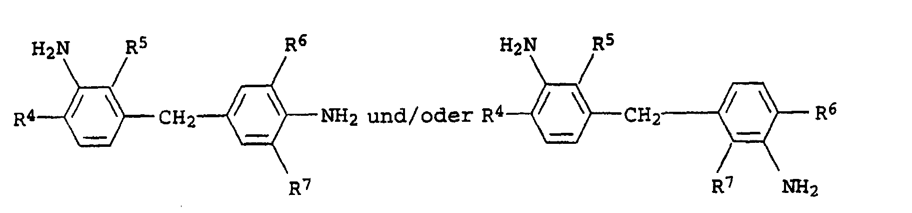 verwendet werden, wobei R⁴, R⁵, R⁶ und R⁷ die obengenannte Bedeutung haben.
   Vorzugsweise verwendet werden 3,5-Dimethyl-3',5'-diisopropyl- und 3,3',5,5'-Tetraisopropyl-4,4'-diamino-diphenylmethan. Die Diamino-di-phenylmethane können einzeln oder in Form von Mischungen eingesetzt werden.
   Die genannten Kettenverlängerungsmittel und/oder Vernetzungsmittel (c) können einzeln oder als Mischungen von gleichen oder verschiedenen Verbindungsarten verwendet werden. Sofern Kettenverlängerungs, Vernetzungsmittel oder Mischungen davon Anwendung finden, kommen diese zweckmäßigerweise in Mengen von 2 bis 60 Gew.-%, vorzugsweise 8 bis 50 Gew.-% und insbesondere 10 bis 40 Gew.-%, bezogen auf das Gewicht der Komponente (b) zum Einsatz.
(d) Erfindungsgemäß finden als innere Formtrennmittel (d) Alkylberntseinsäureamide, Alkenylbernsteinsäureamide, vorzugsweise Alkylbernsteinsäureimide und insbesondere Alkenylbernsteinsäureimide oder Mischungen aus diesen Amiden, Imiden oder Amiden und Imiden Verwendung. Im Sinne der Erfindung sind unter diesen Amiden und/oder Imiden vorzugsweise zu verstehen: Alkylbernsteinsäuremonoamide, -monoimide, Poly(alkylbernsteinsäure)-polyamide, -polyimide, -monoamidmonoimide, -polyamidimide, -amidpolyimide, polyamidpolyimide, Alkenylbernsteinsäuremonoamide, -monoimide, Poly(alkenylbernsteinsäure)-polyamide, -polyimide, -monoamidmonoimide, -polyamidimide, -amidpolyimide und -polyamidpolyimide, wobei Alkenylbernsteinsäuremonoimide und Dialkenylbernsteinsäurediimide insbesondere bevorzugt sind. Die Alkyl- oder vorzugsweise Alkenylgruppen können linear oder vorzugsweise verzweigtkettig sein und besitzen vorteilhafterweise ein mittleres Molekulargwicht Mₙ (Zahlenmittelwert) von 800 bis 3.000, vorzugsweise von 800 bis 2.300 und insbesondere von 900 bis 1.400. Die Alkylgruppen bestehen vorzugsweise aus Polyethylen-, Polyisopropylen- und Polyisobutylenresten und die Alkenylgruppen vorzugsweise aus Polyethenyl-, Polyisopropenyl- und insbesondere Polyisobutenylresten.
   Die Alkyl- oder Alkenylbernsteinsäureamide oder -imide können hergestellt werden nach bekannten Verfahren, wie z.B. durch Umsetzung von Alkyl- oder Alkenylbernsteinsäure und/oder den entsprechenden Alkyl- oder Alkenylbernsteinsäurederivaten, wie z.B. -mono- und/oder -dialkylester mit 1 bis 4 C-Atomen, vorzugsweise 1 bis 2 C-Atomen im Alkylrest, -mono- und/oder -dichloride und insbesondere -anhydride mit primären und/oder sekundären organischen, vorzugsweise aliphatischen und/oder cycloaliphatischen Mono- und/oder Polyaminen, wobei zur Imidbildung Wasser, Alkhol oder Chlorwasserstoff abgespalten wird. Nach einer bevorzugten Ausführungsform werden die Alkyl- oder Alkenylbernsteinsäureamide hergestellt durch Umsetzung der Alkyl- oder Alkenylbernsteinsäureanhydride mit primären und/oder sekundären, aliphatischen und/oder cycloaliphatischen Mono- und/oder Polyaminen und die Alkyl- oder Alkenylbernsteinsäureimide durch Umsetzung der Alkyl- oder Alkenylbernsteinsäureanhydride mit primären aliphatischen und/oder cycloaliphatischen Mono- und/oder Polyaminen unter Abspaltung von Wasser bei Temperaturen im Bereich von 140 bis 220°C, vorzugsweise von 160 bis 180°C.
   Zur Herstellung der Alkyl- oder Alkenylbernsteinsäureamide oder -imide können die primären oder sekundären Mono- und/ oder Polyamine und Alkyl- und/oder Alkenylbernsteinsäuren oder -derivate in solchen Mengen verwendet werden, daß pro Mol Mono- oder Polyamin mindestens eine Amid- oder vorzugsweise Imidbindung gebildet wird.
   Als Aufbaukomponenten zur Herstellung der Alkyl- oder Alkenylbernsteinsäureamide oder -imide werden vorzugsweise Alkyl- oder Alkenylbernsteinsäureanhydride verwendet, wie sie beispielsweise in der EP-A-666 880 (WO 94 00 937), EP-A-0 632 071 (US-A-5 420 207) oder EP-A-0 629 638 beschrieben werden. Geeignete Ausgangsstoffe sind jedoch auch Alkyl- oder Alkenylbernsteinsäuren und -säuärederivate, z.B. Alkyl- oder Alkenylbernsteinsäuremono- und/oder -dialkylester, -mono- und/oder dihalogenide und vorzugsweise -anhydride, wie sie z.B. in der EP-A-0 457 599 beschrieben werden, Homopolymere aus polyalkenylsubstituierter Bernsteinsäure oder -derivaten, vorzugsweise -anhydriden, Copolymere aus den vorgenannten polyalkenylsubstituierten Bernsteinsäuren und/oder Bernsteinsäurederivaten und olefinisch ungesättigten Monomeren mit 2 bis 30 C-Atomen und Copolymere aus Maleinsäureanhydrid, Polyisoalkenen, vorzugsweise Polyisopropen und insbesondere Polyisobuten und olefinisch ungesättigten Monomeren mit 2 bis 30 C-Atomen, vorzugsweise 18 bis 24 C-Atomen.
   Als organische Mono- und/oder Polyamine eignen sich z.B. aliphatische, cycloaliphatisch oder heterocyclische, sekundäre und vorzugsweise primäre Mono- und/oder Polyamine. In Betracht kommen beispielsweise sekundäre und vorzugsweise primäre aliphatische Amine mit 1 bis 20 C-Atomen, vorzugsweise 4 bis 8 C-Atomen im linearen oder verzweigtkettigen Alkylrest, wie z.B. Ethyl-, n- und iso-Propyl-, n-Butyl-, iso-Butyl-, sek-Butyl-, n- und iso-Amyl-, 1,2-Dimethylpropyl-, n- und iso-Hexyl-, 2-Ethyl-1-hexyl-, n-Octyl-, 2-Ethyl-1-octyl-, Decyl- und Dodecylamin, Diisopropyl-, Ethylbutyl-, Polyisopropyl- und Polyisobutylamin;
   sekundäre und vorzugsweise primäre cycloaliphatische Amine mit 5 bis 8 C-Atomen, vorzugsweise 6 C-Atomen im Cycloalkylrest, wie z.B. Cyclopentyl-, Cycloheptyl-, N-Methyl-cyclohexyl-, N-Ethyl-cyclohexyl- und vorzugsweise Cyclohexylamin; lineare, verzweigte oder cyclische Alkanolamine mit 2 bis 12 C-Atomen, vorzugsweise 2 bis 10 C-Atomen, wie z.B. Ethanol-, Propanol-, Butanolamin, 3-Hydroxybutylamin, 2-Hydroxybutylamin, Pentanolamin, Hexanolamin, 4-Hydroxyhexylamin, Octanolamin und 2-Hydroxyethylpiperazin, N-Methyl-, N-Butyl-, N-Neopentyl-, N-Cyclohexylethanolamin, N-Methyl-isopropanolamin und Dialkanolamine, wie z.B. Diethanol-, Diepropanol-, Diisopropanol- und Dibutanolamin;
   sekundäre und vorzugsweise primäre, lineare oder verzweigtkettige aliphatische Diamine mit 2 bis 20 C-Atomen, vorzugsweise 2 bis 12 C-Atomen, wie z.B. Ethylen-, 1,2- bzw. 1,3-Propylen-, Neopentylen-, 1,3- bzw. 1,4-Butylen-, 1,6-Hexamethylen-, 2,4,4-Trimethyl-1,6-hexamethylen-, 1,8-Octamethylen-, 2-Ethyl-1,8-Octamethylen-, 1,10-Decamethylen-, 1,12-Dodecamethylen-diamin, N,N'-Dialkyl-dialkylendiamine, wie z.B. N,N'-Dimethyl-, N,N'-Diethyl-1,4-butylendiamin und N,N'-Dimethyl-1,6-hexamethylen-diamin;
   sekundäre und vorzugsweise primäre cycloaliphatische Diamine mit 5 bis 8 C-Atomen, vorzugsweise 6 C-Atomen im Cycloalkylenrest, wie z.B. Diamino-cyclopentan, Diamino-cycloheptan, Diaminocyclooctan und vorzugsweise Diaminocyclohexan, N,N'-Dimethyl-diamino-cyclohexan, N-Methyl- und N-Isopropyldiamino-cyclohexan und sekundäre und vorzugsweise primäre aliphatische oder cycloaliphatische Mono- und/oder Polyamine mit Molekulargewichten von zweckmäßigerweise 88 bis 3.500, vorzugsweise von 100 bis 2.000, die zusätzlich sekundäre und/ oder tertiäre Aminogruppen und/oder heterocyclische Reste und/oder Ethergruppen und /oder Hydroxylgruppen sowie Brückenglieder aus Schwefelatomen, -SO₂- und -CO-Gruppen gebunden enthalten, wie z.B. Dialkylentriamine, Trialkylentetramine, Tetraalkylenpentamine und Polyalkylen-polyamine mit Molekulargewichten bis 5.000, vorzugsweise bis 3.500, wobei die Alkylengruppen gleich oder verschieden sein konnen und 2 bis 6 C-Atome, vorzugsweise 2 oder 3 C-Atome besitzen, beispielsweise Diethylen-, Dipropylen-, Dibutylen-, Ethylen-propylen- und Ethylen-butylen-diamin, Triethylen- und Tripropylen-tetramin, Tetraethylen- und Tetrapropylenpentamin, 1-Diethylamino-4-pentyl-, 3(2-Ethylhexoxy)-propyl-, 3-(2-Aminoethyl)-aminopropylamin, N,N'-Bis-(3-aminopropyl)ethylendiamin, N-2-Aminoethyl-ethanolamin, 2-Aminoethoxyethanol-2, 4,9-Dioxadodecan-1,12-diamin, N,N'-Bis-(3-aminopropyl)-ethylen-diamin, 1-(2-Aminoethyl)-piperazin, -morpholin, 1-(2-Hydroxyethyl)-piperazin, 1,4-Bis-(2-aminoethyl)-piperazin, 1,4-Bis-(3-aminopropyl)-piperazin, Piperazin, Rückstände aus der Morpholindestillation;
   Tris-(aminoethyl)amin, Tris-(3-aminopropyl)-amin und Polyoxyalkylen-polyamine mit sekundären und vorzugsweise primären Aminogruppen, einer Funktionalität von 1 bis 6, vorzugsweise 2 bis 4 und Molekulargewichten von 400 bis 5.000, vorzugsweise von 400 bis 2.000, wie z.B. Polyoxypropylen-diamine, Polyoxyethylen-diamine, Polyoxypropylen-polyoxyethylen-diamine, Polyoxypropylen-triamine, Polyoxyethylen-triamine, Polyoxypropylen-polyoxyethylen-triamine und Polyoxypropylenpolyoxyethylen-tetramine. Geeignet sind auch Polyoxyalkylenpolyamine, die bis zu 50 %, vorzugsweise bis zu 15 %, endständige primäre und/oder sekundäre Hydroxylgruppen gebunden enthalten. Die organischen Amine können einzeln oder als Mischungen aus Aminen der gleichen Gruppen oder aus Aminen von verschiedenen Gruppen eingesetzt werden.
   Als organische Amine werden vorzugsweise n-Butylamin, Tridecylamin, 6-Methyl-heptyl-2-amin, 1-(2-Aminoethyl)piperazin, 1-(2-Hydroxyethyl)piperazin, N-(2-Aminoethyl)-ethanolamin und insbesondere Dialkylentriamine, wie z.B. Diethylentriamin und Dipropylentriamin, N,N-Dimethyl-diaminopentan-1,5, Polyoxyalkylen-polyamine, z.B. Polyoxyethylen-diamine, -triamine, Polyoxypropylen-diamine, -triamine, Polyoxypropylen-polyoxyethylen-diamine und -triamine eingesetzt.
   Als innere Formtrennmittel geeignete Alkylbernsteinsäureamide, vorzugsweise -imide und Alkenylbernsteinsäureamide, insbesondere -imide werden beispielsweise beschrieben in den Patentschriften und -anmeldungen US-A-3 306 907, US-A-4 234 435, WO 94/00508 und WO 90/03359, die in vollem Umfang als Bestandteil der Erfindungsbeschreibung anzusehen sind.
   Als innere Formtrennmittel insbesondere bewährt haben sich Alkenylbernsteinsäureimide der Formeln (I) und/oder (II) 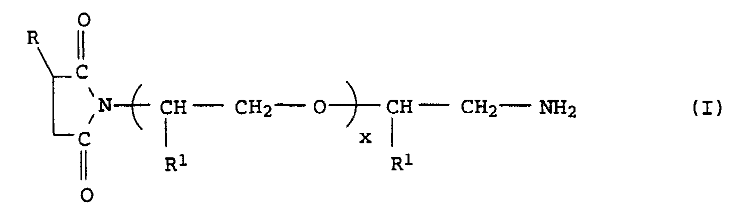 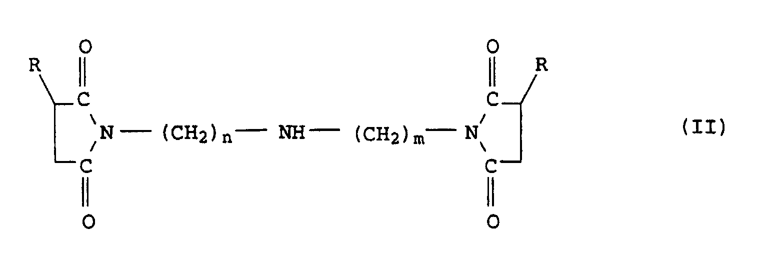 in denen bedeuten:
   R einen Polyisopropylen-, vorzugsweise Polyisobutylenrest mit einem Molekulargewicht von 800 bis 3.000, insbesondere von 900 bis 1.400,
   R¹ ein Wasserstoffatom oder vorzugsweise eine Methylgruppe, wobei R¹ gleich oder verschieden sein kann und (̵HR¹-CH₂O)̵ₓ ein Molekulargewicht von 200 bis 4.000,vorzugsweise von 230 bis 2.000 aufweist,
   n und m gleiche oder verschiedene ganze Zahlen von 2 bis 5, vorzugsweise 2 oder 3 sind.

   Die erfindungsgemäß als innere Formtrennmittel verwendbaren Alkylbernsteinsäureamide und/oder -imide und/oder vorzugsweise Alkenylbernsteinsäureamide und/oder insbesondere -imide können einzeln oder in Form von Mischungen verwendet werden, wobei die Mischungen aus Amiden, Imiden oder Amiden und Imiden bestehen können. Vorzugsweise verwendet werden Mischungen, die üblicherweise bereits bei der Herstellung der Amide und/oder Imide gebildet werden. In Abhängigkeit von hergestellten Polyisocyanat-Polyaddtionsprodukten und den Ausgangsstoffen hierfür können die inneren Formtrennmittel in den unterschiedlichsten Mengen verwendet werden, wobei diese auch unter Berücksichtigung der Formwerkzeuggeometrie und des -materials in einfachen Handversuchen leicht ermittelt werden können. Üblicherweise werden die Alkyl- und/oder Alkenylbernsteinsäureamide und/oder -imide in einer Menge von 0,5 bis 15 Gew.-Teilen, vorzugsweise 1 bis 10 Gew.-Teilen und insbesondere 3,5 bis 7 Gew.-Teilen bezogen auf 100 Gew.-Teile der Verbindungen mit mindestens zwei reaktiven Wasserstoffatomen und Molekulargewichten von 500 bis 9.000 verwendet (Komponente (b).
(e) Als Katalysatoren (e) zur Herstellung der Polyisocyanat-Polyadditionsprodukte werden insbesondere Verbindungen verwendet, die die Reaktion der Hydroxylgruppen enthaltenden Verbindungen der Komponente (b) und gegebenenfalls (c) mit der organischen, gegebenenfalls modifizierten Polyisocyanaten (a) stark beschleunigen. In Betracht kommen organische Metallverbindungen, vorzugsweise organische Zinnverbindungen, wie
   Zinn-(II)-salze von organischen Carbonsäuren, z.B. Zinn-(II)-diacetat, Zinn-(II)-dioctoat, Zinn-(II)-diethylhexoat und Zinn-(II)-dilaurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat. Als gut geeignet haben sich auch Dialkylzinn(IV)-mercaptoverbindungen erwiesen, wie z.B. Bislaurylzinn(IV)-dimercaptid, und Verbindungen der allgemeinen Formeln R₂Sn(SR'-O-CO-R")₂ oder R₂Sn(SR'-CO-OR")₂, in denen R einen Alkylrest mit mindestens 8 Kohlenstoffatomen, R' einen Alkylrest mit mindestens 2 Kohlenstoffatomen und R" einen Alkylrest mit mindestens 4 Kohlenstoffatomen bedeuten. Als Katalysatoren dieser Art, die beispielsweise in der DD-A-218 668 beschrieben werden, seien beispielhaft genannt: Dioctylzinn-bis/thioethylenglykol-2-ethylhexoat), Dioctylzinn-bis(thioethylen-glykollaurat), Dioctylzinn-bis(thiolatoessigsäure-2-ethylhexylester, Dioctylzinn-bis(thiolatoessigsäurehexylester) und Dioctylzinn-bis(thiolatoessigsäurelaurylester. Als Katalysatoren sehr gut bewährt haben sich ferner Organozinnverbindungen mit Zinn-Sauerstoff- oder Zinn-Schwefel-Bindungen, wie sie beispielsweise in der DD-A-255 535 beschrieben werden, der allgemeinen Formeln (R₃Sn)₂O, R₂SnS, (R₃Sn)₂S, R₂Sn(SR')₂ oder RSn(SR')3, in denen R und R' Alkylgruppen darstellen, die 4 bis 8 Kohlenstoffatome bei R sowie 4 bis 12 Kohlenstoffatome bei R' enthalten und R' außerdem die Reste -R"COOR" und -R"OCOR"' bedeuten kann, in denen R" Alkylgruppen mit 1 bis 6 Kohlenstoffatomen und R"' Alkylengruppen mit 4 bis 12 Kohlenstoffatomen sind. Als Beispiele hierfür seien genannt: Bis(tributylzinn)oxid, Dibutylzinnsulfid, Dioctylzinnsulfid, Bis(tributylzinn)sulfid, Dibutylzinn-bis(thioglykolsäure-2-ethylhexylester), Dioctylzinn-bis(thioglykolsäure-2-ethylhexylester), Octylzinn-tris(thioglykolsäure-2-ethyl-hexyl-ester), Dioctylzinn-bis(thioethylenglykol-2-ethyl-hexoat) und Dibutylzinn-bis (thioethylenglykollaurat).
   Die organischen Metallverbindungen können als Katalysatoren einzeln oder in Form von Katalysatorkombinationen eingesetzt werden. Als äußerst vorteilhaft hat sich eine Kombination erwiesen, die besteht aus Di-n-octylzinn-bis-(2-ethylhexylthioglykolat) und Mono-n-octylzinn-tris-(2-ethylhexylthioglykolat), vorteilhafterweise im Gewichtsverhältnis 70:30 bis 30:70 oder 94:6.
   Die organischen Metallverbindungen können ferner in Kombination mit stark basischen Aminen verwendet werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin, N,N,N',N'-Tetramethyl-diaminodicyclohexylmethan, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,30)-octan und vorzugsweise 1,4-Diaza-Bicyclo-(2,2,2)-otan und Alkanolaminverbindungen, wie Triethanolamin, Triisopropanolamin, N-Methyl- und N-Ethyl-di-ethanolamin und Dimethylethanolamin.
   Insbesondere bei Verwendung eines Polyisocyanatüberschusses kommen als Katalysatoren ferner in Betracht: Tris-(dialkylaminoalkyl) s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid und Alkalialkoholate, wie z.B. Natriummethylat und Kaliumisopropylat, Alkaliformiate und -acetate, wie z.B. Kaliumformiat und Kaliumacetat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew-%, insbesondere 0,05 bis 2 Gew.-% Katalysator bzw. Katalysatorkombination bezogen auf das Gewicht der Komponente (b).
(f) Als Treibmittel (f) zur Herstellung von zelligen PU- oder PU-PH-Elastomeren und PU- oder PIR-Schaumstoffen findet vorzugsweise Wasser Verwendung, das mit den organischen, gegebenenfalls modifizierten Polyisocyanaten (a) unter Bildung von Kohlendioxid und Aminogruppen reagiert, die ihrerseits mit Polyisocyanaten (a) zur Harnstoffgruppen weiterreagieren und dadurch die mechanischen Eigenschaften der zelligen Polyisocyanat-Polyadditionsprodukte beeinflussen können.
   Zur Erzielung der technisch üblichen Raumgewichte wird das Wasser zweckmäßigerweise in Mengen von 0,05 bis 7 Gew.-%, vorzugsweise von 0,1 bis 6 Gew.-% und insbesondere von 2 bis 4 Gew.-%, bezogen auf das Gewicht der Aufbaukomponente (a) bis (c) verwendet.
   Als Treibmittel (f) können anstelle von Wasser oder vorzugsweise in Kombination mit Wasser auch niedrigsiedende Flüssigkeiten, die unter dem Einfluß der exothermen Polyadditionsreaktion verdampfen und vorteilhafterweise einen Siedepunkt unter Normaldruck im Bereich von -40 bis 80°C, vorzugsweise von 10 bis 50°C besitzen, oder Gase eingesetzt werden.
   Die als Treibmittel geeigneten Flüssigkeiten der oben genannten Art und Gase können z.B. ausgewählt werden aus der Gruppe der Alkane, wie z.B. Propan, n- und iso-Butan, n- und iso-Pentan und vorzugsweise der technischen Pentangemische, Cycloalkane und Cycloalkene, wie z.B. Cyclobutan, Cyclopenten, Cyclohexen und vorzugsweise Cyclopentan und/oder Cyclohexan, Dialkylether, wie z.B. Dimethylether, Methylethylether oder Diethylether, tert.-Butylmethylether, Cycloalkylenether, wie z.B. Furan, Ketone, wie z.B. Aceton, Methylethylketon, Carbonsäureester, wie z.B. Ethylacetat, Methylformiat und Ethylen-Acrylsäuretertiärbutylester, tertiäre Alkohole, wie z.B. tertiär Butanol, Carbonsäuren, wie z.B. Ameisensäure, Essigsäure und Propionsäure, Fluoralkane, die in der Troposphäre abgebaut werden und deshalb für die Ozonschicht unschädlich sind, wie z.B. Trifluormethan, Difluormethan, Difluorethan, Tetrafluorethan und Heptafluorethan und Gase, wie z.B. Stickstoff, Kohlenmonoxid und Edelgase, wie z.B. Helium, Neon und Krypton.
   Als Treibmittel geeignet sind ferner Salze, die sich thermisch zersetzen, wie z.B. Ammoniumbicarbonat und/oder Ammoniumcarbamat oder Verbindungen, die in situ solche Salze bilden, wie z.B. wäßriger Ammoniak und/oder Amine und Kohlendioxid, und Ammoniumsalze orgnaischer Carbonsäuren, wie z.B. die Monoammoniumsalze der Malonsäure oder Borsäure.
   Die zweckmäßigste Menge an festen Treibmitteln, niedrigsiedenden Flüssigkeiten und Gasen, die jeweils einzeln oder in Form von Mischungen, z.B. als Flüssigkeits- oder Gasmischungen oder als Gas-Flüssigkeitsgemische eingesetzt werden können, hängt ab von der Dichte, die man erreichen will und der eingesetzten Menge an Wasser. Die erforderlichen Mengen können durch einfache Handversuche leicht ermittelt werden. Zufiedenstellende Ergebnisse liefern üblicherweise Feststoffmengen von 0,5 bis 30 Gew.-Teilen, vorzugsweise von 2 bis 15 Gew.-Teilen, Flüssigkeitsmengen von 1 bis 15 Gew.-Teilen, vorzugsweise von 3 bis 12 Gew.-Teilen und/oder Gasmengen von 0,01 bis 80 Gew.-Teilen, vorzugsweise von 10 bis 35 Gew.-Teilen, jeweils bezogen auf das Gewicht der Aufbaukomponenten (a), (b) und gegebenenfalls (c). Die Gasbeladung mit z.B. Luft, Kohlendioxid, Stickstoff und/oder Helium kann sowohl über die höhermolekularen Verbindungen (b) und gegebenenfalls niedermolekularen Kettenverlängerungs- und/oder Vernetzungsmitteln (c) als auch über die Polyisocyanate (a) oder über (a) und (b) und gegebenenfalls (c) erfolgen.
g) Die nach dem erfindungsgemäßen Verfahren hergestellten kompakten oder zelligen Formkörper aus Polyisocyanat-Polyadditionsprodukten können mit einer Deckschicht, z.B. aus Lack oder einem Dekormaterial versehen werden und/oder einen Einleger als Befestigungselement und/oder insbesondere ein Verstärkungsmittel enthalten.
   Als Dekormaterialien in Betracht kommen beispielsweise gegebenenfalls bedrucktes oder buntes Papier, Pappe, Karton, Folien aus TPU, PVC, polyvinylchloridhaltigen Polymerisatgemischen, z.B. aus PVC/ABS, PVC/PU, PVC/ABS/Polyvinylacetat, Vinylchlorid/Methacrylat/Butadien/Styrolcopolymerisat oder Etyhlen/Vinylacetat/Vinylchloridpfropfcopolymerisat und Textilien sowie Teppiche.
   Bewährt haben sich beispielsweise Einleger aus metallischen Werkstoffen, wie z.B. Aluminium, Kupfer, Titan, Messing oder Stahlblech oder Kunststoffen wie z.B. TPU, Polyamid, Polycarbonat, Polyalkylenterephthalat, z.B. Polybutylenterephthalat und Polyolefin-homo- oder -copolymeren sowie aus Mischungen und Blends derartiger Kunststoffe.
   Als Verstärkungsmittel in Betracht kommen z.B. Fasern und aus Fasern hergestellte Gelege, Gewebe, Matten, Filze oder Vliese. Geeignete Fasern sind beispielsweise Naturfasern wie z.B. Zellulose-, z.B. Baumwoll-, Sisal-, Jute-, Hanf-, Schilf- oder Flachsfasern, Kunststofffasern wie z.B. Polyester-, Polyurethan-, Polyamid-, Aramid- oder Polyacrylnitrilfasern, Metallfasern, vorzugsweise Kohlefasern und insbesondere Glasfasern, wobei die Fasern mit Haftvermittlern und/oder Schlichten ausgerüstet sein können.
   Geeignete Glasfasern, die z.B., wie bereits ausgeführt wurde, auch in Form von Glasgeweben, -matten, -vliesen und/oder vorzugsweise Glasseidenrovings oder geschnittener Glasseide aus alkaliarmen E-Gläsern mit einem Durchmesser von 5 bis 200 µm, vorzugsweise 6 bis 15 µm eingesetzt werden können, weisen nach ihrer Einarbeitung in die PU-Formmassen im allgemeinen eine mittlere Faserlänge von 0,05 bis 1 mm, vorzugsweise von 0,1 bis 0,5 mm auf.
   Zur Herstellung von Formteilen, z.B. im Dichtebereich von 0,15 bis 1,4 g/cm³, finden insbesondere Kombinationen aus einem PU-System und Glasmatten, -geweben und/oder -gelegen Verwendung. Für Formkörper bis zu einer Gesamtdichte von ungefähr 0,6 g/cm³ und eine Dicke bis zu ungefähr 5 mm eignen sich z.B. voluminöse Endlosglasmatten, beispielsweise mit Glasgewichten von 225 bis 650 g/m², die beim Aufschäumen des PU-Systems sehr gut durchlässig sind, so daß eine vollständige Tränkung der Glasmatten erzielt werden kann. Die nach dem erfindungsgemäßen Verfahren hergestellten Formkörper können Verstärkungsmittelgehalte, z.B. Glasgehalte, bis zu 75 Gew.-% besitzen, z.B. bei zusätzlichem oder alleinigem Einsatz von Glasgeweben und/oder Glasgelegen; werden hingegen nur Endlosglasmatten eingesetzt, so ist bedingt durch das hohe Volumen der Matten der Glasgehalt niedriger und erreicht bis ungefähr 45 Gew.-%.
h) Zur Herstellung der selbsttrennenden, kompakten oder zelligen, gegebenenfalls Verstärkungsmittel enthaltenden Formkörpern aus Polyisocyanat-Polyadditionsprodukten kann es aus verfahrenstechnischen oder systemspezifischen Gründen zweckmäßig sein, zusätzliche Hilfsmittel mit zu verwenden. Hierfür in Betracht kommen beispielsweise zusätzliche äußere und/oder innere Trennmittel, oberflächenaktive Substanzen, Schaumstabilisatoren, Zellregler, Gleitmittel, Füllstoffe, Farbstoffe, Pigmente, Flammschutzmittel, Hydrolyseschutzmittel, fungistatische und bakteriostatisch wirkende Substanzen oder Mischungen davon sowie insbesondere zur Herstellung von Formkörpern mit einer verdichteten Randzone und einem zelligen Kern unter Einsatz von Wasser als Treibmittel in einem geschlossenen Formwerkzeug unter Verdichtung mikroporöse Aktivkohle und/oder mikroporöse Kohlenstoffmolekularsiebe gemäß US-A-5 254 597, kristalline, mikroporöse Molekularsiebe und/ oder kristallines Siliciumoxid gemäß US-A-5 110 834, amorphe mikroporöse Kiesegel gemäß EP-A-0 513 573, Konzentrate aus Polyhydroxylverbindungen und Ammoniumcarbonat und/oder Salze aus Aminen und Kohlendioxid.
   Als zusätzliche Trennmittel eignen sich beispielsweies Metallsalze der Stearinsäure, die aus handelsüblicher Stearinsäure hergestellt werden können, und die, ohne daß die Trennwirkung signifikant beeinträchtigt wird, bis zu 10 Gew.-%, vorzugsweise bis zu 5 Gew.-%, gegebenenfalls ungesättigte Carbonsäuren mit 8 bis 24 C-Atomen, wie z.B. Palmitinsäure, Ölsäure, Ricinolsäure u.a. enthalten kann.
   Als Metalle für die Bildung der Metallsalze der Stearinsäure finden beispielsweise Alkalimetalle, vorzugsweise Natrium und Kalium, Erdalkalimetalle, vorzugsweise Magnesium und Calcium und insbesondere Zink Verwendung. Vorzugsweise werden als Metallsalze der Stearinsäure Zinkstearat, Calciumstearat und Natriumstearat oder Mischungen aus mindestens zwei Stearaten eingesetzt. Insbesondere verwendet wird eine Mischung aus Zink-, Calcium- und Natriumstearat.
   Sofern sich die zusätzliche Mitverwendung der Metallsalze der Stearinsäure als Trennmittel als vorteilhaft erweist, werden die Metallstearate zweckmäßigerweise in einer Menge bis 12 Gew.-%, vorzugsweise von 0,1 bis 8 Gew.-%, bezogen auf das Gewicht der höhermolekularen Verbindungen mit mindestens zwei reaktiven Wasserstoffatomen (b) eingesetzt.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 10 Gew.-Teile der Komponente (b), angewandt.
   Als Gleitmittel hat sich der Zusatz eines Ricinolsäurepolyesters mit einem Molekulargewicht von 1.500 bis 3.500, vorzugsweise von 2.000 bis 3.000 besonders bewährt, der zweckmäßigerweise in einer Menge von 0,5 bis 10 Ge.w-%, vorzugsweise 5 bis 8 Gew.-%, bezogen auf das Gewicht der Komponente (b) oder der Komponenten (b) und (c) eingesetzt wird.
   Als Füllstoffe, insbesondere verstärkend wirkende Füllstoffe, sind die an sich bekannten, üblichen organischen und anorganischen Füllstoffe und Verstärkungsmittel zu verstehen. Im einzelnen seien beispielhaft genannt: anorganische Füllstoffe, wie z.B. Glaskugeln, silikatische Mineralien, beispielsweise Schichtsilikate wie Antigorit, Serpentin, Hornblenden, Amphibole, Chrisotil, Talkum, Wollastonit, Glimmer und synthetische Silikate wie z.B. Magnesiumaluminiumsilikat (Transpafill^{®}); Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid und Zinksulfid. Als organische Füllstoffe kommen beispielsweise in Betracht: Ruß, Melamin, Kollophonium, Cyclopentadienylharze und Pfropfpolymerisate. Die Füllstoffe können sowohl einzeln als auch in geeigneten Kombinationen untereinander oder miteinander eingesetzt werden. Verwendbar sind ferner Füllstoffe in Verbindung mit Verstärkungsmitteln.
   Die anorganischen und/oder organischen Füllstoffe können der Reaktionsmischung einverleibt werden, wobei sie, sofern sie überhaupt mitverwendet werden, vorteilhafterweise in einer Menge von 0,5 bis 50 Gew.-%, vorzugsweise 1 bis 40 Ge.w-%, bezogen auf das Gewicht der Komponenten (a) bis (c) eingesetzt werden.
   Geeignete Flammschutzmittel sind beispielsweise Trikresylphosphat, Tris-(2-chlorethyl)phosphat, Tris-(2-chlorpropyl)phosphat, Tris-(1,3-dichlorpropyl)phosphat, Tris- (2,3-dibrompropyl)phosphat und Tetrakis-(2-chlorethyl)-ethylendiphosphat.
   Außer den bereits genannten halogensubstituierten Phosphaten können auch anorganische Flammschutzmittel, wie gegebenenfalls modifizierter roter Phosphor, Blähgraphit, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Blähgraphit und Ammoniumpolyphosphat, Ammoniumpolyphosphaten und Melamin sowie gegebenenfalls Blähgraphit und/ oder Stärke zum Flammfestmachen der erfindungsgemäß hergestellten Formkörper verwendet werden. Im allgemeinen hat es sich als zweckmäßig erwiesen, 2 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.
   Nähere Angaben über die oben genannten anderen üblichen Hilfs- und Zusatzstoffe sind der Fachliteratur, beispielsweise der Monographie von J.H. Saunders und K.C. Frisch, "High Polymers", Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983, zu entnehmen.

Zur Herstellung der kompakten oder zelligen Formkörper können die organischen, gegebenenfalls modifizierten Polyisocyanate (a), höhermolekularen Verbindungen mit mindestens zwei reaktiven Wasserstoffatomen (b) und gegebenenfalls niedermolekularen Kettenverlängerungs- und/oder Vernetzungsmittel in solchen Mengen zu Umsetzung gebracht werden, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,50:1, vorzugsweise 0,95 bis 1,15:1 und insbesondere 1,0 bis 1,1:1 beträgt.

Zur Herstellung von Formkörpern aus Isocyanuratgruppen aufweisenden Polyisocyanat-Polyadditionsprodukten finden zweckmäßigerweise Äquivalenz-Verhältnisse von NCO-Gruppen der Polyisocyanate (a) zur Summe der reaktiven Wasserstoffatome der Komponenten (b) und gegebenenfalls (c) von 1,6 bis 30:1, vorzugsweise 1,6 bis 15:1 und insbesondere 2,5 bis 10:1 Verwendung.

Die erfindungsgemäßen zelligen oder kompakten, gegebenenfalls Verstärkungsmittel enthaltenden Formkörper aus Polyisocyanat-Polyadditionsprodukten, die vorzugsweise Urethan- oder Urethan- und Harnstoffgruppen sowie gegebenenfalls Isocyanuratgruppen oder auch überwiegend Harnstoffgruppen gebunden haben, können nach dem Prepolymer-Verfahren oder vorzugsweise nach dem one shot-Verfahren mit Hilfe der Niederdrucktechnik oder der Hochdrucktechnik in offenen oder vorzugsweise in geschlossenen, zweckmäßigerweise temperierbaren Formwerkzeugen, beispielsweise metallischen Formwerkzeugen, z.B. aus Aluminium, Gußeisen oder Stahl oder Formwerkzeugen aus faserverstärkten Polyester- oder Epoxidformmassen hergestellt werden.

Zellige und kompakte Formkörper aus Polyurethan- oder Polyurethan-Polyharnstoff-Elastomeren werden insbesondere mittels der Reaktionsspritzgußtechnik (RIM-Technik) hergestellt. Diese Verfahrensweisen werden beispielsweise beschrieben von Piechota und Röhr in "Integralschaumstoff", Carl-Hanser-Verlag, München, Wien, 1975; D.J. Prepelka und J.L. Wharton in Journal of Cellular Plastics, März/April 1975, Seiten 87 bis 98, U. Knipp in Journal of Cellular Plastics, März/April 1973, Seiten 76 bis 84 und im Kunststoff-Handbuch, Band 7, Polyurethane, 2. Auflage, 1983, Seiten 333 ff.

Als besonders vorteilhaft hat es sich erwiesen, nach dem Zweikomponentenverfahren zu arbeiten und die Aufbaukomponenten (b), (d) und gegebenenfalls (c) sowie (e) bis (f) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel zu verwenden.

Die Ausgangskomponenten können bei einer Temperatur von 15 bis 80°C, vorzugsweise 20 bis 55°C gemischt und in ein offenes oder geschlossenes Formwerkzeug, das zur Herstellung von verstärkten Formkörpern zuvor mit Geweben, Matten, Filzen, Vliesen und/oder Gelegen als Verstärkungsmittel ausgelegt werden kann, eingefüllt werden. Zur Herstellung von Integralschaumstoffen und zelligen oder kompakten Elastomeren kann die Reaktionsmischung unter erhöhtem Druck in das geschlossene Formwerkzeug eingebracht werden.

Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 120°C, vorzugsweise 30 bis 80°C und insbesondere 45 bis 60°C. Sofern die Formkörper in einem geschlossenen Formwerkzeug unter Verdichtung, z.B. zur Ausbildung einer kompakten Randzone und einem zelligen Formkörperkern, hergestellt werden, hat es sich als zweckmäßig erwiesen, Verdichtungsgrade im Bereich von 1,2 bis 8,3 vorzugsweise 1,6 bis 6,0 und insbesondere 2,0 bis 4,0 anzuwenden.

Die nach dem erfindungsgemäßen Verfahren hergestellten zelligen Elastomeren besitzen Dichten von ungefähr 0,76 bis 1,1 g/cm³, vorzugsweise von 0,9 bis 1,0 g/cm³, wobei die Dichte von flüllstoffhaltigen und/oder insbesondere mit Glasmatten verstärkten Produkten höhere Werte, z.B. bis 1,4 g/cm³ und mehr erreichen kann. Formkörper aus derartigen zelligen Elastomeren finden z.B. Verwendung in der Automobilindustrie, beispielsweise im Automobilinnenraum als Verkleidungsteile, Hutablagen, Kofferraumabdeckung, Armaturentafeln und Kopfstützen, und als Außenteile, wie z.B.

Heckspoiler, Regenrinnen und Stoßfänger sowie als Laufrollen. Kompakte Elastomere besitzen Dichten von ungefähr 1,0 bis 1,1 g/cm³, wobei die füllstoffhaltigen und/oder verstärkungsmittelhaltigen Produkte Dichten bis zu 2,0 g/cm³ und mehr aufweisen können. Kompakte Formkörper dieser Art eignen sich beispielsweise in der Automobilindustrie als Sitzwanne, Reserveradmulde oder Motorspritzschutz.

Die nach dem erfindungsgemäßen Verfahren hergestellten weichelastischen, halbharten und harten Polyurethan-Formschaumstoffe sowie die entsprechenden Polyurethan-Integralschaumstoff-Formkörper weisen eine Dichte von 0,025 bis 0,75 g/cm³ auf, wobei die Dichten der PU-Formschaumstoffe vorzugsweise 0,03 bis 0,24 g/cm³ und insbesondere 0,03 bis 0,1 g/cm³ und die Dichten der PU-Integralschaumstoff-Formkörper vorzugsweise 0,08 bis 0,75 g/cm³ und insbesondere 0,24 bis 0,6 g/cm³ betragen. Die PU-Schaumstoff- und PU-Integralschaumstoff-Fornkörper werden z.B. verwendet in der Fahrzeug-, z.B. Automobil-, Flugzeug- und Schiffbauindustrie, der Möbel- und Sportartikelindustrie als beispielsweise Polstermaterialien, z.B. Auto-, Motorrad- oder Traktorensitze, als Kopfstützen, Verkleidungselemente, Gehäuseteile, Konsolen, Skikern, Skiinnenschutz, Dachrahmen und Fertighimmel in Verkehrsmitteln und Fensterrahmen.

Als innere Formtrennmittel finden die Alkyl- und/oder Alkenylbernsteinsäuremonoamide, -monoimide, Poly(alkylbernsteinsäure)-und/oder Poly(alkenylbernsteinsäure)-polyamide, -polyimide, -amidimide, -polyamidimide, -amidpolyimide und -polyamidpolyimide oder Mischungen aus mindestens zwei der -amide und/oder -imide insbesondere Verwendung zur Herstellung von kompakten, harten Polyurethan-Formkörpern, harten Polyurethan-Integralschaumstoff-Formkörpern und kompakten oder zelligen, flächigen verstärkten, vorzugsweise mit Glasmatten verstärkten Polyurethan- oder Polyurethan-Polyharnstoff-Formkörpern.

### Beispiele

Herstellung von zelligen, flächigen, mit Glasmatten verstärkten Polyurethan-Formkörpern

### Beispiel 1

### A-Komponente:

Mischung, die bestand aus

| | |
|---|---|
| 61,10 Gew.-Teilen | eines Polyoxypropylen-polyols mit der Hydroxylzahl von 490, hergestellt durch Propoxylierung einer Startermischung aus Sucrose und Glycerin im Gewichtsverhältnis 60:40, |
| 21,00 Gew.-Teilen | eines hydroxylgruppenhaltigen Alkylenoxidstearats zur Verbesserung der Fließfähigkeit (^{®}Edenor B33 der Firma Henkel, BRD), |
| 4,2 Gew.-Teilen | Glycerin, |
| 4,0 Gew.-Teilen | eines mit Pentaerythrit gestarteten Polyoxyethylen-polyols mit der Hydroxylzahl 630, |
| 2,0 Gew.-Teilen | Dimethylaminocyclohexan, |
| 1,8 Gew.-Teilen | Wasser, |
| 0,9 Gew.-Teilen | eines Stabilisators auf Silikonbasis (Stabilisator OS 340 der BAYER AG, BRD) und |
| 5,00 Gew.-Teilen | eines inneren Trennmittels der Formel (I), hergestellt durch Umsetzung von einem Mol Polyisobutylenbernsteinsäureanhydrid mit einem mittleren Molekulargewicht Mₙ des Polyisobutylenrests von 1.300 und einem Mol Polyoxypropylen-diamin mit einem Molekulargewicht von 230 (^{®}Jeffamine D 230 der Texaco Chemical Comp.). |

### B-Komponente:

Mischung aus Diphenylmethan-diisocyanaten und Polyphenyl-polymethylen-polyisocyanaten mit einem NCO-Gehalt von 31 Gew.-% (Roh-MDI)

Die mit Glasmatten verstärkte Formplatten wurden hergestellt auf einer Hochdruckdosieranlage vom Typ ^{®}Puromat 30, der Elastogran-Maschinenbau, Straßlach bei München, nach der RIM-Technik in einem auf 35°C temperierten metallischen Formwerkzeug mit den inneren Abmessungen 4 x 60 x 300 mm, das zu Beginn der Versuchsreihe einmal mit dem äußeren Trennmittel LS 1000 der Firma Klüber Chemie AG, BRD, behandelt wurde. In das Formwerkzeug eingelegt wurden handelsübliche Glasmatten mit einem Flächengewicht von 450 bis 600 g/m².

100 Gew.-Teile der A-Komponente und 130 Ge.w-Teile der B-Komponente, die jeweils eine Temperatur von 25°C besaßen, wurden nach dem RIM-Verfahren auf der vorgenannten Hochdruckdosieranlage gemischt und in das geschlossene, Glasmatten enthaltende Formwerkzeug eingespritzt.

Der Druck der A-Komponente betrug 170 bar und der der B-Komponente 200 bar. Die Schußzeit betrug 2 Sekunden.

Die Formplatte wurde nach 120 Sekunden entformt. Sie besaß eine Dichte von 0,9 g/cm³ und bei Verwendung einer Glasmatte von 600 g/m² einen Glasgehalt von 20 Gew.-%.

Nachdem 65 Formplatten problemlos entformt werden konnten, wurde die Versuchsserie abgebrochen.

### Beispiel 2

Man verfuhr analog den Angaben des Beispiels 1, verwendete jedoch in der A-Komponente anstelle des inneren Formtrennmittels nach Formel I 5,00 Gew.-Teile eines Formtrennmittels nach Formel II mit n=m=3, das hergestellt wurde durch Umsetzung von 2 Mol Polyisobutylenbernsteinsäureanhydrid mit einem mittleren Molekulargewicht Mₙ des Polyisobutylenrestes von 1.300 und einem Mol Dipropylentriamin.

Die Herstellung der mit Glasmatten verstärkten Formplatten erfolgte ebenfalls analog den Angaben des Beispiels 1.

Nach der Herstellung von 65 Formplatten, die problemlos entformt werden konnten, wurde die Versuchsserie abgebrochen.

Herstellung von kompakten Polyurethan-Formkörpern

### Beispiel 3

### A-Komponente:

Mischung, die bestand aus

| | |
|---|---|
| 42,95 Gew.-Teilen | eines Polyols mit der Hydroxylzahl von 940, hergestellt aus 1 Mol Trimethylolpropan und 1 Mol Ethylenoxid, |
| 23,30 Gew.-Teilen | eines Polyols mit der Hydroxylzahl von 480, hergestellt aus 1 Mol Ethylendiamin und 4 Mol 1,2-Propylenoxid, |
| 18,60 Gew.-Teilen | eines mit N,N-Dimethyl-dipropylen-triamin gestarteten Polyoxypropylen (85,85 Gew.-%)-polyoxyethylen(3,95 Gew.-%)-polyols mit der Hydroxylzahl von 113, |
| 3,00 Gew.-Teilen | eines Kondensationsprodukts aus Ölsäure und Triethanolamin, |
| 3,50 Gew.-Teilen | eines Stabilisators auf Silikonbasis (DC 193 der Dow Corning), |
| 2,0 Gew.-Teilen | einer 33 gew.-%igen Lösung von Triethylendiamin in Dipropylenglykol, |
| 0,15 Gew.-Teilen | einer Zinnmercaptoverbindung (UL 32 der Firma Witco) und |
| 6,50 Gew.-Teilen | eines erfindungsgemäßen inneren Trennmittels, hergestellt durch Umsetzung von einem Mol Polyisobutylenbernsteinsäureanhydrid mit einem mittleren Molekulargewicht Mₙ des Polyisobutylenrestes von 900 und einem Mol N,N-Dimethylpropylendiamin-1,3. |

### B-Komponente:

Mischung aus Diphenylmethan-diisocyanaten und Polyphenyl-polymethylen-polyisocyanaten mit einem NCO-Gehalt von 31 Gew.-% (Roh-MDI).

Die Formkörper wurden hergestellt auf einer Hochdruckdosieranlage vom Typ ^{®}Puromat 30 nach der RIM-Technik in einem auf 60°C temperierten Aluminiumformwerkzeug mit den inneren Abmessungen 4 x 250 x 300 mm.

100 Gew.-Teile der A-Komponente und 140,6 Gew.-Teile der B-Komponente, die jeweils eine Temperatur von 30°C besaßen, wurden nach der RIM-Technik auf der in Beispiel 1 genannten Hochdruckdosieranlage gemischt und in das geschlossene Formwerkzeug eingespritzt.

Der Druck der A- und B-Komponente betrug 150 bis 200 bar, bei einer Luftbeladung der A-Komponente von 40 Vol-%. Die Schußzeit betrug 2 Sekunden.

Die Formplatte wurde nach 90 Sekunden entformt. Sie besaß eine Dichte von 1,15 g/cm³.

Nach der Herstellung von 20 Formplatten, die problemlos entformt werden konnten, wurde die Versuchsreihe abgebrochen.

### Beispiel 4

Man verfuhr analog den Angaben des Beispiels 3, verwendete jedoch in der A-Komponente anstelle des genannten inneren Formtrennmittels 6,5 Gew.-Teile eines inneren Formtrennmittels, das hergestellt wurde durch Umsetzung eines Mols Polyisobutylenbernsteinsäureanhydrid mit einem mittleren Molekulargewicht Mₙ des Polyisobutylenrestes von 1.300 und einer Mischung aus 0,67 Mol Polyisobutylen-diamin mit einem mittleren Molekulargewicht Mₙ von 1.040 und 0,33 Mol N,N-Dimethyl-propylen-diamin-1,3.

Nach der Herstellung von 20 Formplatten, die problemlos entformt werden konnten, wurde die Versuchsreihe abgebrochen.

Herstellung von harten Polyurethan-Integralschaumstoff-Formkörpern

### Beispiel 5

### A-Komponente:

Mischung, die bestand aus

| | |
|---|---|
| 9,75 Gew.-Teilen | eines Polyoxypropylen(75 Gew.-%)-polyoxyethylen(25 Gew.-%)-glykols mit der Hydroxylzahl von 35, |
| 11,0 Gew.-Teilen | eines mit Glycerin gestarteten Polyoxypropylenpolyols mit der Hydroxylzahl von 400, |
| 33,75 Gew.-Teilen | einer Polyolmischung mit einer Hydroxylzahl von 728 auf der Grundlage von tertiär Butanol, einem mit Glycerin gestarteten Polyoxypropylenpolyol mit der Hydroxylzahl von 570 (^{®}Caradol 555 der Firma Shell) und einem mit Trimethylolpropan gestarteten Polyoxypropylen-polyol mit der Hydroxylzahl von 875, |
| 14,50 Gew.-Teilen | eines Trimethylolpropan-propylenoxidaddukts mit der Hydroxylzahl von 860, |
| 8,70 Gew.-Teilen | eines Polyoxypropylen-polyols mit der Hydroxylzahl von 400 und einer Funktionalität von 4,3, hergestellt unter Verwendung einer Startermischung aus Sucrose, Glycerin und Wasser, |
| 1,6 Gew.-Teilen | Silikonstabilisator (Tegostab^{®} B8418), |
| 0,6 Gew.-Teilen | Silikonstabilisator (Tegostab B2219 der Goldschmidt AG, Essen), |
| 1,5 Gew.-Teilen | N,N-Dimethylaminocyclohexan, |
| 0,7 Gew.-Teilen | 1-Methylimidazol, |
| 5,0 Gew.-Teilen | Tris(chlorethyl)phosphat, |
| 0,7 Gew.-Teilen | Schaumstabilisator (Zusatzmittel SM der BAYER AG), |
| 0,2 Gew.-Teilen | Phosphorsäure, |
| 6,0 Gew.-Teilen | eines hydroxylgruppenhaltigen Alkylenoxidstearats mit der Hydroxylzahl 50 und |
| 6,0 Gew.-Teilen | des in Beispiel 2 beschriebenen inneren Formtrennmittels, hergestellt aus 2 Molen Polyisobutylen (Mₙ=1.300)bersteinsäureanhydrid und einem Mol Dipropylentriamin. |

### B-Komponente:

Mischung aus Diphenylmethan-diisocyanaten und Polyphenylpolymethylen-polyisocyanaten mit einem NCO-Gehalt von 31 Gew.-% (Roh-MDI)

100 Gew.-Teile der A-Komponente und 126,89 Gew.-Teile der B-Komponente wurden bei 23°C unter intensivem Rühren gemischt.

Ein Teil der Reaktionsmischung wurde in ein offenes Formwerkzeug eingefüllt und aufschäumen gelassen. Die freigeschäumte Dichte des resultierenden PU-Schaumstoffs betrug 0,088 g/cm³.

Ein anderer Teil der schäumfähigen Reaktionsmischung wurde in einer solchen Menge in ein auf 57 bis 60°C temperiertes Formwerkzeug mit den inneren Abmessungen von 100 x 30 x 1 cm aus an der Oberfläche epoxidiertem Aluminium an einem Ende eingebracht, daß nach dem Aufschäumen und Aushärten ein Integralschaumstoff-Formkörper mit einer Gesamtdichte von 0,6 g/cm³ resultierte.

Der Formkörper wurde nach 300 Sekunden entformt. Er besaß eine Shore-D-Härte von 68.

Die Reaktionsmischung ergab folgende Handzeiten:

| | |
|---|---|
| Startzeit | 32 Sekunden, |
| Steigzeit | 72 Sekunden und |
| Abbindezeit | 53 Sekunden. |

Vor Beginn der Versuchsserie wurde die innere Oberfläche des epoxidierten Aluminiumformwerkzeugs einmal mit dem äußeren Trennmittel Acmos 35-3053 H der Firma Acmos behandelt.

Nachdem 26 Formkörper hergestellt und problemlos entformt werden konnten, wurde die Versuchsreihe abgebrochen.

Die Kraft zum Öffnen des Formwerkzeugs (Aufreißkraft) wurde als Maß der Trennwirkung bei jeder Entformung gemessen. Diese war sehr niedrig und lag im Bereich von 50 bis 100 N.

### Beispiel 6

Man verfuhr analog den Angaben des Beispiels 5, verwendete jedoch 6 Gew.-Teile des in Beispiel 1 beschriebenen inneren Trennmittels aus einem Mol Polyisobutylen (Mₙ=1.300)bernsteinsäureanhydrid und einem Mol Polyoxypropylendiamin mit einem Molekulargewicht von 230.

Die an der Reaktionsmischung gemessenen Handzeiten betrugen:

| | |
|---|---|
| Startzeit | 34 Sekunden, |
| Steigzeit | 71 Sekunden und |
| Abbindezeit | 54 Sekunden. |

Die Dichte des freigeschäumten PU-Schaumstoffs betrug 0,097 g/cm³.

Die hergestellten Integralschaumstoff-Formkörper besaßen eine Gesamtdichte von 0,97 g/cm³ und eine Shore-D-Härte von 67.

Nachdem 26 Formkörper hergestellt und problemlos entformt werden konnten, wurde die Versuchsserie abgebrochen.

Die beim Öffnen des Formwerkzeugs gemessene Aufreißkraft lag im Bereich von 30 bis 50 N.

Wurden die Formkörper unter Verwendung eines handelsüblichen inneren Formtrennmittels, wie z.B. 4941792/0 der Firma Münch hergestellt, so betrug die Aufreißkraft ungefähr 300 N.

## Patentansprüche

1. Verfahren zur Herstellung von selbsttrennenden, kompakten oder zelligen, gegebenenfalls Verstärkungsmittel enthaltenden Formkörpern aus Polyisocyanat-Polyadditionsprodukten durch Umsetzung von
a) organischen und/oder modifizierten organischen Polyisocyanaten mit
b) mindestens einer Verbindung mit mindestens zwei reaktiven Wasserstoffatomen und einem Molekulargewicht von 500 bis 9.000 und gegebenenfalls
c) Kettenverlängerungs- und/oder Vernetzungsmitteln
in Gegenwart von
d) inneren Formtrennmitteln
und in Gegenwart oder Abwesenheit von
e) Katalysatoren,
f) Treibmitteln,
g) Verstärkungsmitteln und
h) Hilfsmitteln
in einem offenen oder geschlossenen Formwerkzeug, dadurch gekennzeichnet, daß man als innere Trennmittel (d) Alkylbernsteinsäureamide und/oder -imide und/oder Alkenylbernsteinsäureamide und/oder -imide mit einem mittleren Molekulargewicht (Zahlenmittel) Mₙ der Alkyl- oder Alkenylgruppen der Alkyl- oder Alkenylbernsteinsäureamide oder -imide von 800 bis 3000 verwendet.

2. Verfahren nach Anspruch 1, dadurch gekennzeichnet, daß die Alkylgruppen linear oder verzweigt sind und aus Polyisopropylen- oder Polyisobutylenresten bestehen und die Alkenylgruppen aus Polyethenyl-, Polyisopropenyl- oder Polyisobutenylresten bestehen.

3. Verfahren nach einem der Ansprüche 1 oder 2, dadurch gekennzeichnet, daß die Alkyl- oder Alkenylbernsteinsäureamide oder -imide bestehen aus Alkyl- oder Alkenylbernsteinsäuremonoamiden, -monoimiden, -monoamidmonoimiden, -polyamiden, -polyimiden, -polyamidimiden, -amidpolyimiden oder -polyamidpolyimiden.

4. Verfahren nach einem der Ansprüche 1 bis 3, dadurch gekennzeichnet, daß die Alkyl- oder Alkenylbernsteinsäureamide oder -imide hergestellt werden durch Umsetzung von Alkylbernsteinsäure oder -derivaten oder Alkenylbernsteinsäure oder -derivaten mit primären und/oder sekundären organischen Mono- und/ oder Polyaminen.

5. Verfahren nach einem der Ansprüche 1 bis 3, dadurch gekennzeichnet, daß die Alkyl- oder Alkenylbernsteinsäureamide oder -imide hergestellt werden durch Umsetzung von Alkyl- oder Alkenylbernsteinsäureanhydrid mit primären und/oder sekundären aliphatischen und/oder cycloaliphatischen Mono- und/oder Polyaminen mit der Maßgabe, daß die Imidbildung unter Abspaltung von Wasser durchgeführt wird.

6. Verfahren nach einem der Ansprüche 1 bis 5, dadurch gekennzeichnet, daß die Alkyl- oder Alkenylbernsteinsäureimide hergestellt werden durch Umsetzung von Alkyl- und/oder Alkenylbernsteinsäure und/oder -derivaten mit primären organischen Mono- oder Polyaminen ausgewählt aus der Gruppe
der primären aliphatischen Amine mit 1 bis 20 Kohlenstoffatomen im linearen oder verzweigten Alkylrest,
der primären cycloaliphatischen Amine mit 5 bis 7 Kohlenstoffatomen im Cycloalkylrest,
der linearen, verzweigten oder cyclischen Alkanolamine mit 2 bis 12 Kohlenstoffatomen,
der primären, linearen oder verzweigtkettigen aliphatischen Diamine mit 2 bis 12 Kohlenstoffatomen,
der primären cycloaliphatischen Diamine mit 5 bis 8 Kohlenstoffatomen im Cycloalkylrest und
der primären aliphatischen oder cycloaliphatischen Mono- und/ oder Polyamine, die zusätzlich sekundäre und/oder tertiäre Aminogruppen und/oder heterocyclische Reste und/oder Ethergruppen und/oder Hydroxylgruppen sowie Brückenglieder aus Schwefelatomen, -SO₂- und -CO-Gruppen gebunden enthalten.

7. Verfahren nach Anspruch 1, dadurch gekennzeichnet, daß die Alkenylbernsteinsäureimide ausgewählt sind aus Verbindungen der Formeln (I) oder (II) 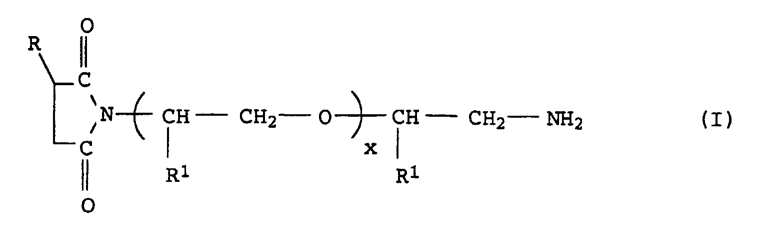 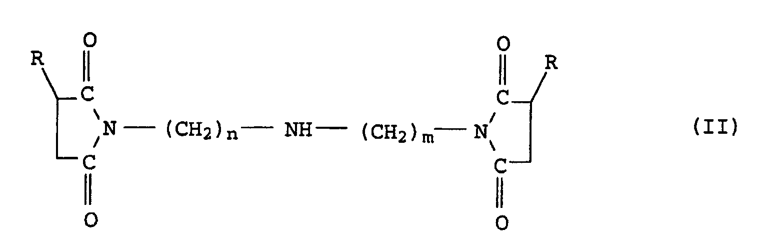 in denen bedeuten:
R einen Polyisobutylenrest mit einem Molekulargewicht von 800 bis 3.000,
R¹ ein Wasserstoffatom oder eine Methylgruppe, wobei R¹ gleich oder verschieden ist und (̵CH₂-CHR¹-O)̵ₓ ein Molekulargewicht von 200 bis 4.000 aufweist,
n und m gleiche oder verschiedene ganze Zahlen von 2 bis 5 sind.

8. Verfahren nach einem der Ansprüche 1 bis 7, dadurch gekennzeichnet, daß man die Alkylbernsteinsäureamide, -imide, Alkenylbernsteinsäureamide oder -imide oder Mischungen aus mindestens zwei der genannten Amide oder Imide oder Mischungen aus Amiden und Imiden in einer Menge von 0,5 bis 15 Gew.-Teilen pro 100 Gew.-Teilen der Komponente (b) verwendet.

9. Verfahren nach einem der Ansprüche 1 bis 8, dadurch gekennzeichnet, daß die Kettenverlängerungs- oder Vernetzungsmittel ein Molekulargewicht von kleiner als 500 besitzen.

10. Verfahren nach einem der Ansprüche 1 bis 9, dadurch gekennzeichnet, daß die Verstärkungsmittel aus Fasern oder Gelegen, Geweben, Matten, Filzen oder Vliesen auf der Grundlage von Glas-, Kohlenstoff-, Metall-, Kunststoff- und/oder Naturfasern bestehen.

11. Verwendung von Alkyl- und/oder Alkenylbernsteinsäuremonoamiden, -monoimiden, Poly(alkylbernsteinsäure)- und/oder Poly(alkenylbernsteinsäure)-polyamiden, -polyimiden, -monoamidmonoimiden, -polyamidimiden, -amidpolyimiden und -polyamidpolyimiden oder Mischungen aus mindestens zwei der -amide und/oder -imide als innere Formtrennmittel zur Herstellungn von Formkörpern aus Polyisocyanat-Polyadditionsprodukten.

## Claims

1. A process for producing self-releasing, compact or cellular moldings comprising polyisocyanate polyaddition products, which moldings may also contain reinforcing materials, by reacting
a) organic and/or modified organic polyisocyanates with
b) at least one compound containing at least two reactive hydrogen atoms and having a molecular weight of from 500 to 9000 and, if desired,
c) chain extenders and/or crosslinkers
in the presence of
d) internal mold release agents
and in the presence or absence of
e) catalysts,
f) blowing agents,
g) reinforcing materials and
h) auxiliaries
in an open or closed mold, wherein the internal release agents (d) used are alkylsuccinamides and/or -imides and/or alkenylsuccinamides and/or -imides having a mean molecular weight (number average) Mₙ of the alkyl or alkenyl groups of the alkyl- or alkenylsuccinamides or -imides of from 800 to 3000.

2. A process as claimed in claim 1, wherein the alkyl groups are linear or branched and comprise polyisopropylene or polyisobutylene radicals and the alkenyl groups comprise polyethenyl, polyisopropenyl or polyisobutenyl radicals.

3. A process as claimed in claim 1 or 2, wherein the alkyl- or alkenylsuccinamides or -imides are alkyl- or alkenylsuccinic monoamides, monoimides, monoamide-monoimides, polyamides, polyimides, polyamide-imides, amide-polyimides or polyamide-polyimides.

4. A process as claimed in any of claims 1 to 3, wherein the alkyl- or alkenylsuccinamides or -imides are prepared by reacting alkylsuccinic acid or its derivatives or alkenylsuccinic acid or its derivatives with primary and/or secondary organic monoamines and/or polyamines.

5. A process as claimed in any of claims 1 to 3, wherein the alkyl- or alkenylsuccinamides or -imides are prepared by reacting alkyl- or alkenylsuccinic anhydride with primary and/or secondary aliphatic and/or cycloaliphatic monoamines and/or polyamines, with the proviso that the imide formation is carried out with elimination of water.

6. A process as claimed in any of claims 1 to 5, wherein the alkyl- or alkenylsuccinimides are prepared by reacting alkyl- and/or alkenylsuccinic acid and/or their derivatives with primary organic monoamines or polyamines selected from the group consisting of
primary aliphatic amines having from 1 to 20 carbon atoms in the linear or branched alkyl radical,
primary cycloaliphatic amines having from 5 to 7 carbon atoms in the cycloalkyl radical,
linear, branched or cyclic alkanolamines having from 2 to 12 carbon atoms,
primary, linear or branched-chain aliphatic diamines having from 2 to 12 carbon atoms,
primary cycloaliphatic diamines having from 5 to 8 carbon atoms in the cycloalkyl radical and
primary aliphatic or cycloaliphatic monoamines and/or polyamines additionally containing secondary and/or tertiary amino groups and/or heterocyclic radicals and/or ether groups and/or hydroxyl groups and bridging units consisting of sulfur atoms, -SO₂- and -CO- groups in bonded form.

7. A process as claimed in claim 1, wherein the alkenylsuccinimides are selected from among compounds of the formula (I) or (II) 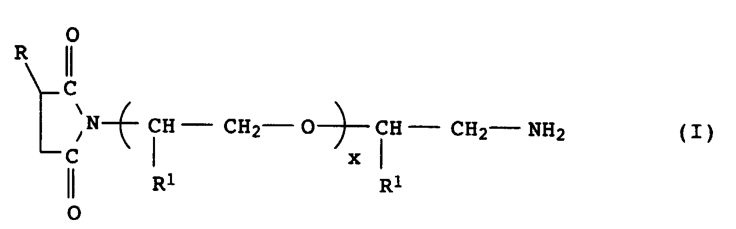 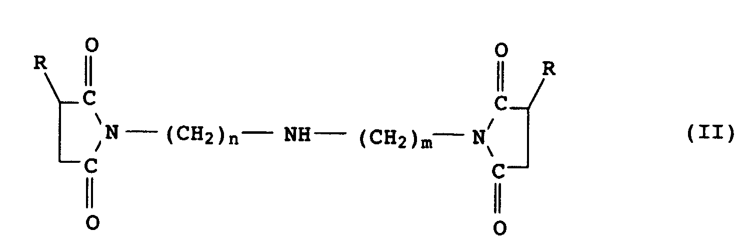 where:
R is a polyisobutylene radical having a molecular weight of from 800 to 3000,
R¹ is a hydrogen atom or a methyl group, where R¹ is identical or different on each appearance and (̵CH₂-CHR¹-O)̵ₓ has a molecular weight of from 200 to 4000,
n and m are identical or different integers from 2 to 5.

8. A process as claimed in any of claims 1 to 7, wherein the alkylsuccinamides, -imides, alkenylsuccinamides or -imides or mixtures of at least two of the specified amides or imides or mixtures of amides and imides are used in an amount of from 0.5 to 15 parts by weight per 100 parts by weight of the component (b).

9. A process as claimed in any of claims 1 to 8, wherein the chain extenders or crosslinkers have a molecular weight of less than 500.

10. A process as claimed in any of claims 1 to 9, wherein the reinforcing materials comprise fibers or lays, woven fabrics, mats, felts or nonwovens based on glass, carbon, metal, synthetic and/or natural fibers.

11. Use of alkyl- and/or alkenylsuccinic monoamides, monoimides, poly(alkylsuccinic) and/or poly(alkenylsuccinic) polyamides, polyimides, monoamide-monoimides, polyamide-imides, amide-polyimides and polyamide-polyimides or mixtures of at least two of the amides and/or imides as internal mold release agents for producing moldings comprising polyisocyanate polyaddition products.

## Revendications

1. Procédé de production de corps moulés autodémoulants, compacts ou cellulaires, contenant éventuellement des agents de renforcement et constitués de produits de polyaddition polyisocyanates, par réaction entre
a) des polyisocyanates organiques et/ou organiques modifiés et
b) au moins un composé présentant au moins deux atomes d'hydrogène réactifs et un poids moléculaire compris entre 500 et 9000 et, éventuellement,
c) des agents d'allongement de chaîne et/ou des agents de réticulation en présence
d) d'agents de démoulage internes
et en présence ou en l'absence
e) de catalyseurs
f) d'agents de gonflement
g) d'agents de renforcement et
h) d'adjuvants
dans un outil de moulage ouvert ou fermé, caractérisé en ce qu'on utilise comme agent de démoulage inteme (d) des amides et/ou des imides de l'acide alkylsuccinique et/ou des amides et/ou des imides de l'acide alkénylsuccinique présentant un poids moléculaire moyen (moyenne arithmétique) Mₙ des groupes alkyle ou alkényle des amides ou imides de l'acide alkylsuccinique ou alkénylsuccinique compris entre 800 et 3000.

2. Procédé selon la revendication 1, caractérisé en ce que les groupes alkyle sont linéaires ou ramifiés et constitués par des résidus polyisopropylène ou polyisobutylène et en ce que les groupes alkényle sont constitués par des résidus polyéthényle, polyisopropényle ou polyisobutényle.

3. Procédé selon une quelconque des revendications 1 ou 2, caractérisé en ce que les amides ou imides de l'acide alkylsuccinique ou alkénylsuccinique sont constitués par des monoamides, des monoimides, des monoamidemonoimides, des polyamides, des polyimides, des polyamideimides, des amidepolyimides ou des polyamidepolyimides de l'acide alkylsuccinique ou alkénylsuccinique.

4. Procédé selon une quelconque des revendications 1 à 3, caractérisé en ce que les amides ou les imides de l'acide alkylsuccinique ou alkénylsuccinique sont produits par réaction entre de l'acide alkylsuccinique ou des dérivés de celui-ci ou de l'acide alkénylsuccinique ou des dérivés de celui-ci et des monoamines et/ou des polyamines organiques primaires et/ou secondaires.

5. Procédé selon une quelconque des revendications 1 à 3, caractérisé en ce que les amides ou les imides de l'acide alkylsuccinique ou alkénylsuccinique sont produits par réaction entre de l'anhydride de l'acide alkylsuccinique ou alkénylsuccinique et des monoamines et/ou des polyamines aliphatiques et/ou cycloaliphatiques primaires et/ou secondaires sous réserve que la formation de l'imide soit réalisée en éliminant de l'eau.

6. Procédé selon une quelconque des revendications 1 à 5, caractérisé en ce que les imides de l'acide alkylsuccinique ou alkénylsuccinique sont produits par réaction entre de l'acide alkylsuccinique et/ou alkénylsuccinique et/ou des dérivés de celui-ci et des monoamines ou des polyamines organiques primaires choisies parmi le groupe
des amines aliphatiques primaires comportant 1 à 20 atomes de carbone dans le résidu alkyle linéaire ou ramifié,
des amines cycloaliphatiques primaires comportant 5 à 7 atomes de carbone dans le résidu cycloalkyle,
des alcanolamines linéaires, ramifiées ou cycliques comportant 2 à 12 atomes de carbone,
des diamines aliphatiques primaires linéaires ou ramifiées comportant 2 à 12 atomes de carbone
des diamines cycloaliphatiques primaires comportant 5 à 8 atomes de carbone dans le résidu cycloalkyle et
des monoamines et/ou polyamines aliphatiques ou cycloaliphatiques primaires comportant en outre des groupes amino secondaires et/ou tertiaires et/ou des résidus hétérocydiques et/ou des groupes éther et/ou des groupes hydroxyle ainsi que des éléments de ponts sous forme liée d'atomes de soufre, de groupes -SO₂- et -CO-.

7. Procédé selon la revendication 1, caractérisé en ce que les imides de l'acide alkénylsuccinique sont choisis parmi les composés selon les formules (I) ou (II) 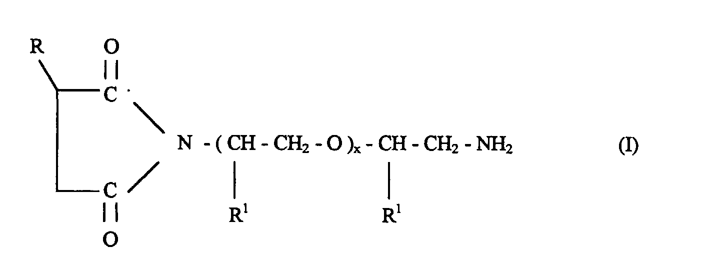 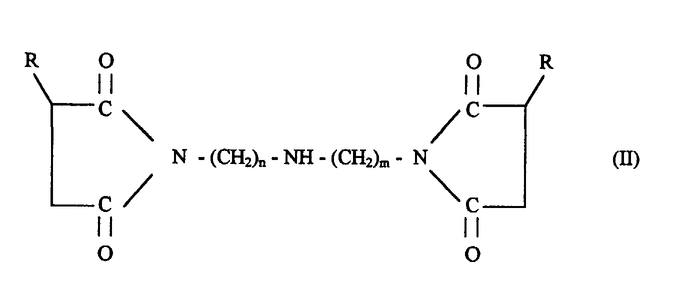 dans lesquelles
R représente un résidu polyisobutylène présentant un poids moléculaire compris entre 800 et 3000
R¹ représente un atome d'hydrogène ou un groupe méthyle, R¹ étant identique ou différent et -(CH₂-CHR¹-O-)ₓ présentant un poids moléculaire compris entre 200 et 4000
n et m étant des nombres entiers identiques ou différents compris entre 2 et 5.

8. Procédé selon une quelconque des revendications 1 à 7, caractérisé en ce qu'on utilise les amides et les imides de l'acide alkylsuccinique et les amides et les imides de l'acide alkénylsuccinique ou des mélanges d'au moins deux des amides ou imides mentionnés ou des mélanges d'amides et d'imides en une quantité comprise entre 0,5 et 15 parties en poids par rapport à 100 parties en poids des composants (b).

9. Procédé selon une quelconque des revendications 1 à 8, caractérisé en ce que les agents d'allongement de chaîne ou de réticulation présentent un poids moléculaire inférieur à 500.

10. Procédé selon une quelconque des revendications 1 à 9, caractérisé en ce que les agents de renforcement sont constitués par des fibres ou des mats, des tissus, des nattes, des feutres ou des non-tissés à base de fibres de verre, de carbone, de métal, synthétiques et/ou naturelles.

11. Utilisation des monoamides et des monoimides de l'acide alkylsuccinique et/ou alkénylsuccinique, des polyamides, des polyimides, des monoamidemonoimides, des polyamideimides, des amidepolyimides et des polyamidepolyimides de l'acide poly(alkylsuccinique) et/ou poly(alkénylsuccinique) ou des mélanges d'au moins deux desdits amides et/ou imides comme agent de démoulage interne pour la production de corps moulés en produits de polyaddition polyisocyanates.
